# EUROPÄISCHE PATENTSCHRIFT

(11) **EP 0 373 573 B1**
(45) Veröffentlichungstag und Bekanntmachung des Hinweises auf die Patenterteilung: **22.06.1994**
(21) Anmeldenummer: 89122862.9
(22) Anmeldetag: 11.12.1989
(51) Int. Cl.: B41M 5/00, B41M 1/42, D21H 25/02, C09D 11/00

(54) **Aufzeichnungsmaterial für Tintenstrahldruck**
Recording material for ink jet printing
Matériel d'enregistrement pour l'impression par jet d'encre

(30) Priorität: 14.12.1988 CH 4623/88; 09.06.1989 CH 2172/89
(43) Veröffentlichungstag der Anmeldung: 20.06.1990
(73) Patentinhaber: CIBA-GEIGY AG, 4002 Basel (CH)
(72) Erfinder: Vieira, Eric, CH-1700 Fribourg (CH); Laver, Hugh Stephen, CH-1700 Fribourg (CH)
(74) Vertreter: Zumstein, Fritz, Dr.

(56) Entgegenhaltungen:
- GB-A- 2 088 777
- PATENT ABSTRACTS OF JAPAN, vol. 7, nr. 81, (M-205)(121), 5 April 1983; JP A 58 008 684

## Beschreibung

Die vorliegende Erfindung betrifft Aufzeichnungsmaterialien für Tintenstrahldruck, die Hydrochinonderivate als Stabilisatoren enthalten.

Das Drucken mittels Tintenstrahl ist ein Druckverfahren, das durch elektrische Signale gesteuert werden kann. Dabei wird ein feiner Strahl von Tintentröpfchen durch eine Düse auf das Aufzeichnungsmaterial gespritzt. Die Tinte ist meistens eine wässrige Lösung eines Farbstoffes. Das Aufzeichnungsmaterial soll den Farbstoff der Tinte rasch und dauerhaft aufnehmen. Meist verwendet man hierfür besonders präparierte Papiere oder Plastikfolien, die mit einer farbstoffbindenden Schicht versehen sind. Wegen der Feinheit der Düsen werden Pigmente kaum verwendet, sondern vorwiegend Farbstoffe, die im Medium des Tintenstrahls vollständig gelöst sind. Diese Farbstoffe haben allerdings generell eine geringere Lichtechtheit als die in konventionellen Druckfarben üblichen Farb-Pigmente. Als Folge davon sind die im Tintenstrahldruck hergestellten Aufzeichnungen unter Lichteinwirkung nur beschränkt lagerfähig. Bei längerer Lagerung unter Licht beginnen sie zu verblassen oder sich zu verfärben.

Es wurde nun gefunden, dass bestimmte Hydrochinonderivate sich für die Stabilisierung von Aufzeichnungsmaterialien für den Tintenstrahldruck besonders eignen.

Hydrochinonderivate als Zusatz für Aufzeichnungsmaterialien für den Tintenstrahldruck sind bereits bekannt. So beschreibt beispielsweise GB-A-2 088 777 unter anderem Dihydroxybenzole, welche mit -COOH, -SO₃ H oder Dialkyl substituiert sind, sowie Phosphatderivate von Dialkyldihydroxybenzolen. Ferner sind Di- und Trihydroxybenzole beispielsweise in der JP-A-58-08684 beschrieben. 2,2'-Dihydroxy-4-me- thoxybenzophenon ist Zum Beispiel aus der JP-A-61-230975 bekannt. In der JP-A-57-74192 sind Dialkylhydroquinone als geeignete Lichtschutzmittel für Aufzeichnungsmaterialien beim Tintenstrahldruck beschrieben.

In der DE-A-3 121 711 sind unter anderem Hydroxybenzole beschrieben, die 1, 2 oder 3 Hydroxygruppen tragen und gegebenenfalls durch 1 oder 2 -COOH oder -COO-Alkyl substituiert sind, wie zum Beispiel Tannin, Gallussäure und die Methyl-, Ethyl- oder Propylester der Gallussäure. Die genannten Verbindungen werden in Form von flüssigen Zubereitungen als Beschichtung auf das Trägermaterial gebracht um anschliessend mit Lösungen von Uebergangsmetallsalzen farbige Komplexe zu liefern. Die Hydroxyverbindungen sind in diesem Fall also aktiv an der Farbentstehung beteiligt und dienen nicht als Stabilisatoren. Das beschichtete Trägermaterial kann auch für das Ink-Jet-Druckverfahren verwendet werden.

Es besteht weiterhin ein Bedarf nach wirksamen Lichtschutzmitteln für das Aufzeichnungsmaterial beim Tintenstrahldruck.

Gegenstand vorliegender Erfindung ist daher ein Aufzeichnungsmaterial für Tintenstrahldruck enthaltend als Stabilisator mindestens eine Verbindung der Formel I 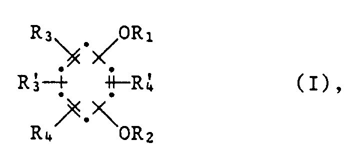 worin
R₁ und R₂ unabhängig voneinander C₁-C₄-Alkyl, welches gegebenenfalls mit einem oder 2 -OH, -COO^{⊖}M^{⊕} und/oder -S0^{⊖}₃ M° substituiert ist, C₃-C₅-Alkenyl, C₃-C₅-Alkinyl, 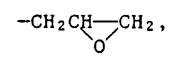
-CH₂CH(OH)CH₂-S0^{⊖}₃ M°, oder -CO-Alkyl (C₁-C₄) bedeuten, welches gegebenenfalls mit -COORs oder -CO-N(R₅)(R₆) substituiert ist, oder, falls OR₁ und OR₂ in ortho-Stellung zueinander stehen, R₁ und R₂ zusammen für C₁-C₆-Alkylen stehen, wobei
M^{⊕} für H^{⊕}, ein ein-, zwei- oder dreiwertiges Metallkation oder eine Gruppe 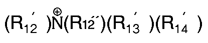 steht, worin R,2 , R12'' R₁₃'
und R,4 unabhängig voneinander H, C₁-C₄-Alkyl, welches gegebenenfalls mit 1 bis 3 OH substituiert oder durch ein O unterbrochen ist, Alkyl, Cyclopentyl, Cyclohexyl, Phenyl, Benzyl oder Tolyl sind, oder R₁ auch für eine Gruppe 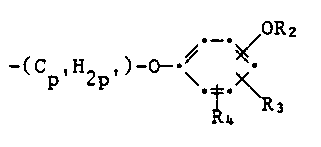 stehen kann, worin p' eine Zahl von 2 bis 6 ist,
R₅ und R₆ unabhängig voneinander H oder C₁-C₄-Alkyl, welches gegebenenfalls mit einem OH, COOR°, COO^{⊖}M^{⊕}, S0^{⊖}₃ M^{⊕}, P(O)(OR°)₂ oder P(O)(O^{⊖}M^{⊕})₂ substituiert ist, bedeuten,
R3 und R'₄ unabhängig voneinander H, C₁-C₄-Alkyl, OH oder C₁-C₄-Alkoxy bedeuten,
R₃ und R₄ unabhängig voneinander H, Halogen, -OR₇, -COOR°, -COO^{⊖}M^{⊕},-OOC-R₅, -CO-N(R₅)(R₆), -(R₅)N-CO-R₆, -CO-R₅, -S0^{⊖}₃ M" , -S0₂N(R₅)(R₆), -P(OR₅)₃, -(O)P(̵OR°)₂, -(O)P-(O^{⊖}M^{⊕})₂, C₁-C₈-Alkyl, welches gegebenenfalls mit 1 bis 7 -ORs oder -OOC-Rs, mit 1 oder 2 -COOR°, COO^{⊖}M^{⊕}, -CO-N(R₅)(R₆) oder mit einem oder zwei -S0^{⊖}₃ M^{⊕}, -S0₂N(R₅)(R₆), -(O)P(̵OR°)2 oder -(O)P-(O^{⊖}M^{⊕})₂ substituiert ist, oder Cs-C₆-Cycloalkyl bedeutet, wobei M^{⊕}, R₅ und R₆ die angegebene Bedeutung haben und
R° ein gegebenenfalls mit einem -OH substituiertes C₁-C₄-Alkyl oder (̵CH2CH20)̵ᵣH, worin r 1 bis 12 ist, bedeutuet,
R₇ ein gegebenenfalls mit 1 oder 2 -OH substituiertes C₁-C₄-Alkyl oder -CO-Alkyl(C₁-C₄), bedeutet, oder
R₃ und R₄ unabhängig voneinander eine der Gruppen der Formeln II-IV bedeuten 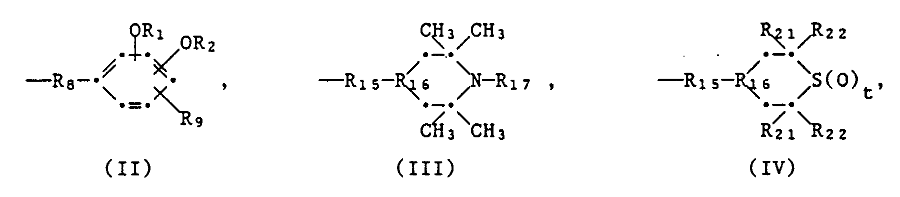 wobei
R₈ eine direkte Bindung oder Methylen ist, R₉ H, C₁-C₈-Alkyl, -COO^{⊖}M^{⊕} oder -S0^{⊖}₃ M^{⊕} ist, worin M^{⊕} und R₁ und R₂ die angegebene Bedeutung haben, R₁₅ -CO-, 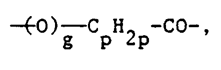 -00C-CₚH₂ₚ-, -COO-CpH₂p-, -O-CₚH₂ₚ-, -O-CH₂-CH(OH)-CH₂- oder 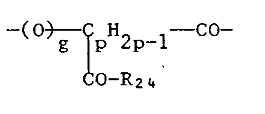 bedeutet, wobei g 0 oder 1 und p 1 bis 6 ist,
R₂₄ -OR₅, -N(R₅)(R₆) oder eine Gruppe 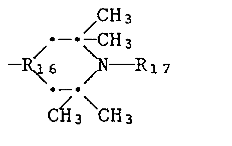 ist,
R₁₆ für einen der folgenden Reste steht: 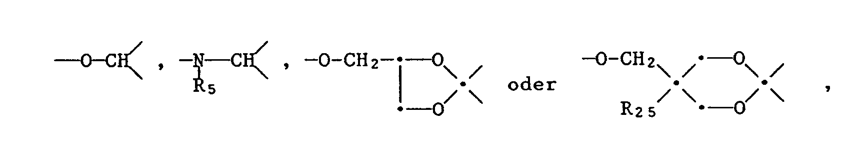 wobei R₂₅ H oder C₁-C₄-Alkyl bedeutet,
R₁₇ H, C₁-C₄-Alkyl, welches gegebenenfalls mit einem -OH substituiert ist, -CH₂-CH(OH)-CH₂-OH, C₁-C₈-Alkoxy, -OH, -CO-Alkyl(C₁-C₄), -COCH = CH₂, Allyl Benzyl oder eine Gruppe 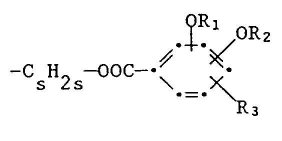 bedeutet, wobei s für die Zahl 2 oder 3,
t für eine Zahl von 0 bis 2 steht, und
R₂₁ und R₂₂ unabhängig voneinander H, C₁-C₄-Alkyl oder Phenyl bedeuten.
Hervorzuheben sind Aufzeichnungsmaterialien, enthaltend als Stabilisator mindestens eine Verbindung der Formel I' 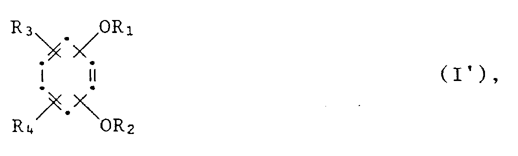 worin
R₁ und R₂ unabhängig voneinander C₁-C₄-Alkyl, welches gegebenenfalls mit einem oder 2 -OH, -COO^{⊖}M^{⊕} und/oder -S0^{⊖}₃ M^{⊕} substituiert ist,
-CH₂CH(OH)CH₂-S0^{⊖}₃ M^{⊕} oder -CO-Alkyl(C₁-C₄) sind, wobei M^{⊕} für H^{⊕}, ein ein-, zwei-oder dreiwertiges Metallkation oder eine Gruppe (R₁₂ )N(R''12)(R'₁₃ ))(R'₁₄) steht,
R₅ und R₆ unabhängig voneinander H oder C₁-C₄-Alkyl, welches gegebenenfalls mit einem OH substituiert ist, bedeuten, R₃ und R₄ unabhängig voneinander H, Halogen, -0R₇, -COOR°, -COO^{⊖}M^{⊕} ,-OOC-R₅, -CO-N-(R₅)(R₆), -(R₅)N-CO-R₆, -CO-Rs, -S0^{⊖}₃ M^{⊕}, -S0₂N(R₅)(R₆), -P(OR₅)₃, -(O)PfOR°)₂, -(O)P-(O^{⊖}M^{⊕})₂, C₁-C₈-Alkyl, welches gegebenenfalls mit 1 bis 7 -ORs oder -OOC-Rs, mit 1 oder 2 -COOR°, -COO^{⊖}M^{⊕}, -CO-N(R₅)-(R₆) oder mit einem -S0^{⊖}₃ M^{⊕}, -S0₂N(R₅)(R₆) -(O)P(̵OR°)2 oder -(O)P(O^{⊖}M^{⊕})₂ substituiert ist, sind,
wobei M^{⊕}, R₅ und R₆ die angegebene Bedeutung haben und
R° ein gegebenenfalls mit einem -OH substituiertes C₁-C₄-Alkyl oder (̵CH₂CH₂0)̵ᵣH, worin r 1 bis 12 ist, bedeutet, und
R₇ ein gegebenenfalls mit 1 oder 2 -OH substituiertes C₁-C₄-Alkyl bedeutet, oder
R₃ und R₄ unabhängig voneinander eine Gruppe der Formel II 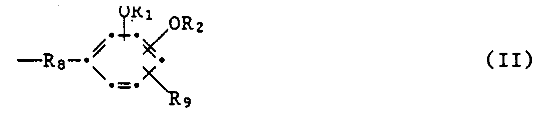 bedeuten, wobei
R₈ eine direkte Bindung oderMethylen ist, R₉ H, C₁-C₈-Alkyl, COO^{⊖}M^{⊕} oder 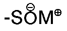 ist, worin M^{⊕} die angegebene Bedeutung hat, ist, und R₁ und R₂ die angegebene Bedeutung haben.

Von Interesse sind Aufzeichnungsmaterialien, worin R₃ und R₄ unabhängig voneinander H, Halogen, -OR₇, -COOR°, -COO^{⊖}M^{⊕}, -CO-N(R₅)(R₆), -CO-NH-OH, -CO-R₅, -S0^{⊖}₃ M^{⊕}, -S0₂N(R₅)(R₆), C₁-C₈-Alkyl, welches gegebenenfalls mit 1 oder 2 -COOR°, -COO^{⊖}M^{⊕}, -CO-N(R₅)(R₆) oder mit einem -S0^{⊖}₃ M", -S0₂-N-(R₅)(R₆) oder -(0)P-(OR^{O})₂, -(O)P-(O^{⊖}M^{⊕})₂ substituiert ist, oder C₂-C₅-Alkenyl, welches gegebenenfalls mit 1 oder 2 -COOR°, -COO^{⊖}M^{⊕}, CO-N(R₅)(R₆), -CO-R₅ oder -C=N substituiert ist, bedeuten.

Von besonderem Interesse sind Aufzeichnungsmaterialien, worin R₃ und R₄ unabhängig voneinander H, Halogen, -OR₇, -COOR°, -COO^{⊖}M^{⊕}, CO-N(R₅)(R₆), -CO-NH-OH, -CO-Rs, -S0^{⊖}₃ M^{⊕}, -S0₂N(R₅)(R₆), Cₗ-C₄-Alkyl, welches mit 1 oder 2 -OH, -COOR°, -COO^{⊖}M^{⊕}, CO-N(R₅)(R₆), oder mit einem S0^{⊖}₃ M^{⊕} oder -S0₂N-(R₅)(R₆) substituiert ist, oder C₂-C₃-Alkenyl, welches mit 1 oder 2 -COOR°, -COO^{⊖}M^{⊕}, -CO-N(R₅)(R₆), -CO-R₅ oder -C=N substituiert ist, bedeuten.

Weiterhin von Interesse sind Aufzeichnungsmaterialien worin R₃ und/oder R₄ den Rest -0R₇ bedeuten, wobei R₇ für C₁-C₄-Alkyl, C₂-C₄-Hydroxyalkyl oder -CH₂-CH(OH)CH₂-OH steht, sowie auch Aufzeichnungsmaterialien, worin R₁ und R₂ für CH₃ stehen, und R₃ für -COO^{⊖}M^{⊕} und R₄ für Methoxy steht.

Besondere Erwähnung verdienen auch Aufzeichnungsmaterialien, worin R₁ und R₂ unabhängig voneinander C₁-C₄-Alkyl oder mit Carboxy substituiertes C₁-C₄-Alkyl oder R₁ und R₂ zusammen C₁-C₄-Alkylen bedeuten, R₃ und R₄ unabhängig voneinander H, COOR° -COO^{⊖}M^{⊕}, C₁-C₄-Alkoxy, C₁-C₄-Alkyl-COOR^{o}, C₁-C₄-Alkyl-C00^{⊖}M^{⊕}, C₁-C₄-Alkyl oder -S0^{⊖}₃ M^{⊕} und R'₃ und R'₄ unabhängig voneinander H oder C₁-C₄-Alkoxy bedeuten.

Etwaige Alkylreste als C₁-C₄-Alkyl bedeuten beispielsweise Methyl, Ethyl, n-Propyl, Isopropyl, n-Butyl, sek-Butyl oder t-Butyl.

Etwaige Alkylreste als C₁-C₈-Alkyl können zusätzlich zu den genannten Bedeutungen beispielsweise n-Pentyl, t-Amyl, n-Hexyl, n-Heptyl, 2-Ethylhexyl, n-Octyl oder 1,1,3,3-Tetramethylbutyl sein.

Etwaige Reste als C₁-C₄-Hydroxyalkyl bedeuten beispielsweise Hydroxyethyl, 2-Hydroxyethyl, 1-Hydroxyethyl, 3-Hydroxypropyl, 3-Hydroxybutyl oder 4-Hydroxybutyl.

Etwaige Reste als gegebenenfalls durch 1 bis 3 OH substituiertes C₁-C₈-Alkyl können zusätzlich zu den Bedeutungen von C₁-C₄-Hydroxyalkyl beispielsweise 2,3-Dihydroxypropyl, 2,2-Di(hydroxymethyl)-propyl, 6-Hydroxyhexyl, 8-Hydroxyoctyl, 1,2,4-Trihydroxy-but-2-yl, 1,2,6-Trihydroxy-hex-2-yl, 1,2,3-Trihydroxy-prop-2-yl sein.

Etwaige Reste als C₂-C₆-Alkylen bedeuten beispielsweise Ethylen, Ethyliden, Tri-, Tetra-, Penta- oder Hexamethylen, 1,2-Propylen, 2,2-Propyliden, 2,2-Butyliden, 1,2-Butylen oder 2,2-Dimethyl-1,3-propylen.

Etwaige Reste als C₁-C₄-Alkylen können zusätzlich zu den vorangehenden Bedeutungen auch Methylen sein.

Etwaige Alkylenreste welche durch 1 oder mehrere -O- oder -N(R₅)-unterbrochen sind, bedeuten Reste, worin zwischen 2 Heteroatomen sich mindestens 2 C-Atome befinden.

Etwaige C₂-Cₛ-Alkenylreste können beispielsweise Vinyl, Allyl, Methallyl, Propen-1-yl, Buten-1-yl oder Penten-1-yl sein.

R₃ und R₄ als gegebenenfalls substituiertes C₂-Cs-Alkenyl können beispielsweise der folgenden Formel entsprechen 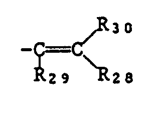 worin R₂₈ H oder CH₃ ist, R₂₉ und R₃₀ unabhängig voneinander -COOR°, -COO^{⊖}M^{⊕}, -CO-CH₃, -CON(R₅)-(R₆) oder -C=N bedeuten.

R₃ und R₄ als Halogen können beispielsweise Cl, Br oder J sein.

Etwaige C₅-C₆-Cycloalkylreste, resp. C₅-C₇-Cycloalkylreste können beispielsweise Cyclopentyl, Cyclopentenyl, Cyclohexyl, Cyclohexenyl oder Cycloheptyl, und bevorzugt Cyclohexyl sein.

Etwaige ein-, zwei- oder dreiwertige Metallkationen können z.B. Alkalimetallkationen, wie Na⁺ oder K⁺ und insbesondere Li⁺ sein, Erdalkalimetallkationen wie ½Mg²⁺ und insbesondere 1/2Ca2+ , ferner 1/₃Al³⁺, ½Mn²⁺, 1/3Fe³⁺, ¹/₂ Co²⁺ , ¹/₂ Ni²⁺, 1/3Cr³⁺ und insbesondere ½Zn²⁺.

Im Substituenten 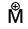 können die Reste R'₁₂ , R''₁₂, R'₁₃ und R₁₄ unabhängig voneinander Wasserstoff, C₁-C₄-Alkyl, welches mit 1 bis 3 OH substituiert sein kann oder gegebenenfalls mit einem O unterbrochen ist, Allyl, Cyclopentyl oder -hexyl, Phenyl, Benzyl oder Tolyl sein. 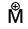 als 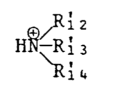 kann beispielsweise NH₄, HN(CH₃)₃, HN(CH₂CH₃)₂, H₃NCH₂CH₂0H, H₂N(CH₂CH₂0H)₂ oder HN(CH₂CH₂0H)₃ bedeuten.

R° bedeutet gegebenenfalls mit OH substituiertes C1-C4-Alkyl.

Die Verbindungen der Formel 1 sind zum Teil bekannt und teilweise im Handel erhältlich oder können nach bekannten Methoden hergestellt werden.

Die erfindungsgemässen Aufzeichnungsmaterialien zeichnen sich durch unerwartete Qualitätsverbesserung aus. Insbesondere ist ihre Beständigkeit gegen Oxidation durch Licht- und Wärmeeinflüsse zu erwähnen. In dieser Hinsicht sind sie entsprechenden Aufzeichnungsmaterialien überlegen, welche Polyhydroxybenzolderivate als Stabilisatoren enthalten. Diese Stabilisatoren sind nicht wirksam genug, um Verfärbungen des Tintenstrahldrucks weitgehend unterdrücken zu können. In erfindungsgemässen Materialien dagegen treten solche Verfärbungen praktisch nicht auf.

Die Aufzeichnungsmaterialien für Tintenstrahldruck bestehen aus einem Träger mit einer durch Tintenstrahl bedruckbaren Oberfläche. Der Träger ist üblicherweise Papier oder eine Plastik-Folie und ist normalerweise auf einer Seite mit einem Material beschichtet, das besonders aufnehmefähig für Tinten ist. Vorzugsweise enthält diese Schicht Si0₂ und Polyvinylalkohol.

Unbeschichtetes Papier für Tintenstrahldruck kann ebenfalls eingesetzt werden. Hier dient das Papier gleichzeitig als Trägermaterial und Tintenaufnahmeschicht. Ferner lassen sich auch Materialien aus Cellulosefasern und textile Fasermaterialien, beispielsweise Baumwollgewebe oder Baumwollmischgewebe aus Baumwolle und Polyacrylamid oder Polyester, welche Verbindungen der Formel (I) enthalten, für den Tintenstrahldruck verwenden.

Das Aufzeichnungsmaterial kann auch transparent sein, wie im Falle von Projektionsfolien.

Die Verbindungen der Formel I können bereits bei der Herstellung des Trägermaterials in dieses inkorporiert werden, beispielsweise bei der Herstellung von Papier durch Zusatz in die Papiermasse. Eine zweite Applikationsmethode ist das Besprühen des Trägermaterials mit einer Lösung der Verbindungen der Formel I. Bei der Lösung handelt es sich um eine wässrige Lösung oder in einem leicht flüchtigen organischen Lösungsmittel.

Meist wird jedoch eine farbstoffaffine Schicht auf das Trägermaterial aufgebracht und in diesem Fall setzt man die Verbindungen der Formel I dieser Beschichtungsmasse zu. Die Beschichtungsmassen bestehen üblicherweise aus einem festen Füllstoff und einem Bindemittel sowie kleineren Anteilen an Additiven.

Der Füllstoff ist der mengenmässige Hauptbestandteil der Beschichtungsmasse. Beispiele für Füllstoffe, die in Frage kommen, sind Silika (Si0₂), Kaolin, Talk, Ton, Ca-, Mg- oder AI-Silikate, Gips, Zeolith, Bentonit, Diatomenerde, Vermiculit, Stärke oder die in der JP-A-60-260 377 beschriebene oberflächenmodifizierte Silika. Kleine Mengen an weissen Pigmenten, wie z.B. Titandioxid, Baryt, Magnesiumoxid, Kalk, Kreide oder Magnesiumcarbonat können mit dem Füllstoff in der Beschichtungsmasse verwendet werden, sofern sie die Dichte des Tintentstrahldrucks nicht zu stark herabsetzen.

Beschichtungsmassen, die für transparente, projektionsfähige Aufzeichnungsmaterialien bestimmt sind, können keine Licht streuende Teilchen, wie Pigmente und Füllstoffe, enthalten.

Das Bindemittel bindet die Füllstoffe unter sich und an das Trägermaterial. Beispiele für gebräuchliche Bindemittel sind wasserlösliche Polymere, wie z.B. Polyvinylalkohol, partiell hydrolysiertes Polyvinylacetat, Cellulose-ether, Polyvinylpyrrolidon und dessen Copolymere, Polyethylenoxid, Salze von Polyacrylsäure, Natrium-alginat, oxidierte Stärke, Gelatine, Casein, Pflanzengummi, Dextrin, Albumin, Dispersionen von Polyacrylaten oder Acrylat-Methacrylat-Copolymeren, Latices von Natur- oder Synthesekautschuk, Poly-(meth)acrylamid, Polyvinylether, Polyvinylester, Copolymere von Maleinsäure, Melaminharze, Harnstoffharze oder chemisch modifizierte Polyvinylalkohole, wie in den JP-A-61-134 290 oder 61-134 291 beschrieben sind.

Man kann dem Bindemittel einen zusätzlichen Farbstoffrezeptor oder Beizmittel zusetzen, die den Farbstoff fester an die Beschichtung fixieren. Farbstoffrezeptoren für saure Farbstoffe sind kationischer oder amphoterer Natur. Beispiele für kationische Rezeptoren sind polymere Ammoniumverbindungen wie z.B. Polyvinylbenzyl-trimethylammoniumchlorid, Polydiallyl-dimethylammoniumchlorid, Polymethacryloxyethyldimethylhydroxyethylammonium-chlorid, Polyvinylbenzyl-methylimidazolium-chlorid, Polyvinylbenzyl-picoliniumchlorid oder Polyvinylbenzyl-tributylammoniumchlorid. Weitere Beispiele sind basische Polymere wie z.B. Poly-(dimethylaminoethyl)methacrylat, Polyalkylenpolyamine und deren Kondensationsprodukte mit Dicyandiamid, Amin-Epichlorhydrin-Polykondensate oder die in den JP-A-57-36 692, 57-64 591, 57-187 289, 57-191 084, 58-177 390, 58-208 357, 59-20 696, 59-33 176, 59-96 987, 59-198 188, 60-49 990, 60-71 796, 60-72 785, 60-161 188, 60-187 582, 60-189 481, 60-189 482, 61-14 979, 61-43 593, 61-57 379, 61-57 380, 61-58 788, 61-61 887, 61-63 477, 61-72 581, 61-95 977, 61-134 291 oder in den US-A-4 547 405 und 4 554 181 sowie in der DE-A-3 417 582 beschriebenen Verbindungen. Ein Beispiel für amphotere FarbstoffRezeptoren ist Gelatine.

Die farbstoffbindende Beschichtung kann eine Reihe weiterer Additive enthalten, wie z.B. Antioxidantien, Lichtschutzmittel (darunter auch UV-Absorber, die nicht den erfindungsgemässen Lichtschutzmitteln entsprechen), Viskositätsverbesserer, optische Aufheller, Biocide oder/und Antistatika.

Beispiele für geeignete Antioxidantien sind insbesondere sterisch gehinderte Phenole und Hydroquinone, wie z.B. die in der GB-A-2 088 777, oder den JP-A-60-72 785, 60-72 786 und 60-71 796 aufgeführten Antioxidantien.

Beispiele für geeignete Lichtschutzmittel sind insbesondere organische Nickelverbindungen und sterisch gehinderte Amine, wie z.B. die in den JP-A- 58-152 072, 61-146 591, 61-163 886, 60-72 785 und 61-146 591 oder die in der GB-A-2 088 777, JP 59-169 883 und 61-177 279 erwähnten Lichtschutzmittel.

Die Zugabe von UV-Absorbern zur Beschichtungsmasse für Tintenstrahldruck, die die Verbindungen der Formel I enthalten, ist besonders vorteilhaft. Geeignete UV-Absorber für diesen Zweck sind z.B. in Research Disclosure Nr. 24239 (1984) Seite 284, GB-A-2 088 777 und EP-A-0 280 650 beschrieben. Besonders die UV-Absorber der 2-Hydroxyphenylbenztriazol-Klasse und ganz besonders 2-(2'-Hydroxy-3',5'-di-t-amylphenyl)-benzotriazol sind für die Verwendung gemeinsam mit Verbindungen der Formel I in Aufzeichnungsmaterialien für den Tintenstrahldruck geeignet. Die UV-Absorber können als Emulsion oder als Dispersion der Beschichtungsmasse zugegeben werden.

Vorzugsweise werden wässrige Beschichtungsmassen verwendet. In diesem Fall müssen die Stabilisatoren der Formel I und die sonstigen Additive in der Beschichtungsmasse möglichst homogen dispergiert werden. Ist der Stabilisator flüssig, so kann er nach Zugabe oberflächenaktiver Mittel direkt im Bindemittel oder in der Beschichtungsmasse dispergiert werden. Ist der Stabilisator fest oder viskos, so empfiehlt es sich, diesen in einem organischen Lösungsmittel zu lösen und diese Lösung in der Beschichtungsmasse zu dispergieren.

Viele der Verbindungen der Formel 1 sind jedoch wasserlöslich und sind deshalb besonders vorteilhaft, da sie direkt in der meist wässrigen Beschichtungsmasse gelöst werden können. Verbindungen, die -OH, -COOH oder -SO₃H-Gruppen enthalten, können am besten direkt in der Beschichtungsmasse mit Zugabe einer geeigneten Lauge gelöst werden. In ähnlicher Weise können auch Verbindungen, die nicht-quaternäre Aminogruppen enthalten, mit Zugabe einer Säure direkt in der Beschichtungsmasse gelöst werden.

Als Lösungsmittel für nicht wasserlösliche Additive verwendet man vorzugsweise ein schwer-flüchtiges Lösungsmittel, damit der Stabilisator auch nach längerer Lagerung des Aufzeichnungsmaterials im flüssigen Zustand bleibt. Zur Herstellung der Dispersionen setzt man jedoch meist noch ein flüchtiges Hilfslösungsmittel zu, welches während des Herstellungsprozesses des Aufzeichnungsmaterials wieder entfernt wird. Beispiele für schwer-flüchtige Lösungsmittel sind organische Flüssigkeiten von öligem Charakter und mit hohem Siedepunkt, wie z.B. Phthalsäurester (z.B. Dimethyl-, Diethyl-, Dibutyl-, Diamyl-, Dihexyl-, Diheptyl-, Dioctyl-, Dinonyl-oder Didecylphthalat, oder Dibutyl-chlorphthalat), Glycolsäureester (z.B. Butylphthalylbutylglycolat), Phenole (z.B. 2,4-Di-n-amylphenol, 2,4-Di-tert.amylphenol), Phosphorsäureester (z.B. Diphenyl-, Triphenyl-, Tricresyl-, Cresyl-diphenyl-, Dioctyl-, Dioctyl-butyl-, Trioctyl-, Tridecyl-, Trixylenyl-, Tri-(isopropylphenyl)-, Tributyl-, Trihexyl-, Trinonyl-, Trioleyl- oder Tri(butoxyethyl)-phosphat)-,Citronensäureester (z.B. O-Acetyl-triethyl-, -tributyl-, -trihexyl-, -trioctyl-, -trinonyl- oder -tridecylcitrat), Benzoesäureester (z.B. Butyl-, Hexyl-, Heptyl-, Octyl-, Nonyl-, Decyl-, Undecyl-, Dodecyl-, Tetradecyl-, Octadecyl- oder Oleyl-benzoat), Ester von substituierten Benzoesäuren (z.B. Butyl-2-methoxybenzoat, Pentyl-o-methylbenzoat, Decyl-p-methylbenzoat, Lauryl-o-chlorbenzoat, Propyl-2,4-dichlorbenzoat, Oleyl-2,4-dichlorbenzoat oder Octyl-p-methoxybenzoat), Fettsäureester und Dicarbonsäureester (z.B. Hexadecylmyristat, Dibutylsebacat, Dibutoxyethyl-succinat, Dioctyl-adipat, Dioctyl-azelat, Benzylcaprylat), Ester von Polyolen (z.B. Decamethylenglykoldiacetat, Triacetyl- oder Tributyroyl-glycerin, Pentaerythrit-tetracapronat, oder Isosorbit-dicaprylat), Fettsäureamide (z.B. N,N-Dimethyl-, N,N-Diethyl- oder N,N-Dibutyllaurylamid), chlorierte Paraffine, aliphatische oder aliphatisch-aromatische Ether (z.B. Glycerin-trialkylether, Glycerin-1,3-dialkylether, n-Pentadecyl-phenylether oder 3-Pentadecylphenylethylether), Alkyl-aryl-carbamate (z.B. Ethyl-N,N-diphenyl-carbamat) oder Mischungen solcher Flüssigkeiten.

Als flüchtige Lösungsmittel kann man Flüssigkeiten, die nicht höher als 150 _{°} C sieden, verwenden. Beispiele hierfür sind Niederalkyl-acetate oder -propionate (z.B. Methyl-, Ethyl-, n-Propyl-, Isopropyl-, Butylacetat, Methyl- oder Ethylpropionat), Ethylformiat, Diethyl-carbonat, niedere Chloralkane (z.B. Tetrachlormethan, Di-und Trichlorethylen, 1,2-Dichlorpropan, Chloroform oder Amylchlorid), Ketone (z.B. Aceton, Methylethyl-keton, Diethylketon oder Methyl-isobutyl-keton), Ether (z.B. Diisopropylether, Dibutylether, Tetrahydrofuran, Dioxan), Alkohole (z.B. Methanol, Ethanol, Isopropanol, Butanol), Monoether von Diolen (z.B. Ethylenglykol-monomethylether oder -monoethylether), Kohlenwasserstoffe (z.B.Cyclohexan, Methylcyclohexan, Ligroin, Benzol, Toluol, Xylol), Nitromethan, Acetonitril, Dimethylsulfoxid, N-Methylpyrrolidon, Dimethylformamid, Tetrahydrothiophen-dioxid, Butyrolacton oder 1,2-Dimethoxyethan.

Diese Hilfslösungsmittel dienen zur besseren Dispergierung des Stabilisators oder seiner Lösung im hochsiedenden Lösungsmittel. Ist jedoch der Stabilisator eine Flüssigkeit von niedriger Viskosität, die sich auf Grund eines polaren oder hydrophilen Charakters gut dispergieren lässt, so ist kein Lösungsmittel notwendig. Dies ist bei vielen der erfindungsgemäss verwendeten Stabilisatoren der Fall. Dadurch kann die Herstellung der Emulsionen vereinfacht werden, es entfällt die Rückgewinnung des Hilfslösungsmittels.

Falls ein Hilfslösungsmittel verwendet wird, so muss dieses vor dem Beschichtungsvorgang wieder entfernt werden. Dies kann durch Erwärmen und/oder Vakuumbehandlung geschehen, z.B. in einem Vakuum-Sprühverdampfer oder einem Vakuum-Rotationsverdampfer.

Wenn das Bindemittel der Beschichtungsmasse eine wässrige Lösung, eine Dispersion oder ein Latex ist, so wird die ölige Phase des Stabilisators oder seiner Lösung in der wässrigen Phase zweckmässig homogen dispergiert werden und diese Dispersion soll eine möglichst lange Topfzeit haben, während der sich die dispergierten Oeltröpfchen nicht vergrössern oder sich die Dispersion nicht entmischt. Dies ist möglich - abgesehen von der Verwendung von Lösungsmitteln - durch Verwendung von oberflächenaktiven Mitteln, durch Zusatz von Kolloiden zur wässrigen Phase sowie durch entsprechend intensive Misch- und Dispergiermaschinen.

Beispiele für geeignete Dispergiermaschinen sind Ultraschall-Geräte, Turbo-Rührer, Homogenisatoren, Kolloidmühlen, Perlmühlen, Sandmühlen oder Hochgeschwindigkeits-Rührer.

Beispiele für Kolloide, die der wässrigen Phase zugesetzt werden und die gebildeten Dispersionen stabilisieren, sind Polyvinylalkohol, Celluloseether, Polyethylenoxid, Salze von Polyacrylsäure, Gelatine, Pflanzengummi, Dextrin, Casein oder Albumin. Diese Kolloide sind gleichzeitig auch Bindemittel.

Beispiele für oberflächenaktive Dispergierhilfsmittel können nicht-ionische, amphotere, anionische oder kationische Tenside sein. Beispiele für nicht-ionische Tenside sind Ester oder Ether von Polyethylenoxiden oder Polypropylenoxiden oder von deren Copolymeren, Fettsäurealkanolamide, ethoxylierte Alkanolamide, partielle Fettsäureester von Polyolen (z.B. von Glycerin, Polyglycerin, Sorbit, Pentaerythrit oder Sucrose), N-Alkyl-morpholine oder langkettige Aminoxide.

Beispiele für amphotere Tenside sind Fettsäureamidoalkyl-betaine, Fettsäureamidoalkyl-sultaine, Fettsäure-imidazolin-betaine, N-Alkyl-ß-aminopropionsäuren oder Alkylen-bis(amidoalkylglycinate).

Beispiele für anionische Tenside sind Alkali- oder Ammoniumsalze von Fettsäuren, von Alkylsulfaten, von Amido-ethylenoxid-sulfaten, von Alkyl- oder Alkylaryl-sulfosäuren, von N-Alkyl- und N-Acyl-taurinen, von Fettsäure-isethionaten, von Alkyl-sulfosuccinaten, von Lignin-sulfonaten, von Petroleum-sulfonaten, von Mono- oder Dialkylphosphaten, von N-Alkylsarkosinen, von Alkylsulfonamidoessigsäuren, von Alkyl-lactaten, von Monoalkyl-succinaten, von Fettsäure-Protein-Kondensationsprodukten, von (Alkyl)Naphthensäuren, von Abietinsäuren, von sulfonierten Fettsäuren oder von N-Acyl-aminocarbonsäuren.

Beispiele von kationischen Tensiden, die auch als Beizmittel für die Farbstoffe der Tinte dienen können, sind die quaternären Ammoniumsalze von langkettigen Fettaminen und Benzylaminen, Imidazolinium-, Pyridinium-, Picolinium- oder Morpholiniumsalze mit langkettigen Alkylresten, quaternäre Ammoniumsalze von langkettigen Alkylamido-alkylaminen oder Bis-ammoniumsalze von quaternären Diaminen.

Wenn das Bindemittel der Beschichtungsmasse als Lösung in einem organischen Lösungsmittel appliziert wird, brauchen die Lichtschutzmittel und die sonstigen Zusätze nicht dispergiert zu werden. Man setzt sie dann direkt der Bindemittellösung zu oder löst sie vorher in einem organischen Lösungsmittel.

Die Beschichtungsmasse wird in der Regel auf den Träger, der meist Papier ist, aufgetragen und durch Erhitzen getrocknet. Die Verbindungen der Formel I können, wie bereits erwähnt, auch in einem separaten Arbeitsgang, allein oder zusammen mit anderen, bereits beschriebenen Komponenten, als wässrige Lösung auf das Aufzeichnungsmaterial gebracht werden. Das Aufbringen kann durch Besprühen, Verleimen in einer Verleimungspresse, einen getrennten Giessvorgang oder durch Eintauchen in eine Wanne erfolgen. Nach einer solchen Nachbehandlung des Aufzeichnungsmaterials ist, natürlich, ein zusätzlicher Trocknungsvorgang nötig.

Das Aufzeichnungsmaterial enthält vorzugsweise 1 bis 10000 mg/m², inbesondere 50-2000 mg/m², mindestens einer Verbindung der Formel I.

Bei den erfindungsgemässen Aufzeichnungsmaterialien spielt es keine Rolle, welcher Art die Tinte und der in ihr gelöste Farbstoff ist und welche Art von Druckvorrichtung (printer) verwendet wird.

Bei den heute verwendeten Druckern unterscheidet man solche mit kontinuierlichem Tintenstrahl und "Drop-on-demand"-Drucker, insbesondere bubble-jet Drucker. Für alle diese apparativen Verfahren lässt sich das erfindungsgemässe Aufzeichnungsmaterial verwenden.

Die Tinten sind meistens wässrige Tinten, sie können aber auch Lösungen des Farbstoffes in einem organischen Lösungsmittel oder in einem geschmolzenen Wachs sein. Wässrige Tinten enthalten meist noch wasserlösliche organische Lösungsmittel, wie z.B. Mono-, Di-, Tri- oder höhere Ethylenglykole, Propylenglykol, Butandiol-1,4, oder Ether solcher Glykole, Thiodiglykol, Glycerin und dessen Ether und Ester, Polyglycerin, Mono-, Di- und Triethanolamin, Propanolamin, Dimethylformamid, Dimethylsulfoxid, Dimethylacetamid, N-Methylpyrrolidon, 1,3-Dimethylimidazolidon, Methanol, Ethanol, Isopropanol, n-Propanol, Diacetonalkohol, Aceton, Methyl-ethyl-keton oder Propylencarbonat.

Wässrige Tinten enthalten wasserlösliche Farbstoffe, wie sie auch für das Färben von natürlichen Fasern bekannt sind. Dies können z.B. Monoazo-, Disazo- oder Polyazofarbstoffe, Reaktivfarbstoffe, Triphenylmethanfarbstoffe, Xanthenfarbstoffe oder Phthalocyaninfarbstoffe sein. Beispiele hierfür sind C.I. Food Black 2, C.I. Direct Black 19, C.I. Direct Black 38, C.I. Direct Black 168, C.I. Sulphur Black 1, C.I. Acid Red 35, C.I. Acid Red 249, C.I. Direct Red 227, C.I. Acid Yellow 23, C.I. Direct Yellow 86, C.I. Acid Blue 9, C.I. Direct Blue 86 oder C.I. Direct Blue 199, C.I. Acid Red 14, C.I. Acid Red 52, C.I. Reactive Red 50, C.I. Direct Yellow 107 und C.I. Direct Black 154.

Wässrige Tinten können auch verschiedene Additive in kleineren Mengen enthalten, wie z.B. Bindemittel, Tenside, Biocide, Korrosionsinhibitoren, Sequestriermittel, pH-Puffer oder Leitfähigkeitszusätze. Sie können auch anionische wasserlösliche UV-Absorber oder sonstige wasserlösliche Lichtschutzmittel enthalten. Im allgemeinen genügt jedoch die erfindungsgemässe Zugabe eines Lichtschutzmittels zum Aufzeichnungsmaterial.

Wenn die Tinte eine nicht-wässrige Tinte ist, so stellt sie eine Lösung des Farbstoffes in einem organischen Lösungsmittel oder Lösungsmittelgemisch dar. Beispiele für hierfür verwendete Lösungsmittel sind Alkylcarbitole, Alkylcellosolven, Dialkylformamide, Dialkylacetamide, Alkohole, insbesondere Alkohole mit 1-4 C-Atomen, Aceton, Methyl-ethylketon. Diethylketon, Methyl-isobutylketon, Di-isopropylketon, Dibutylketon, Dioxan, Ethylbutyrat, Ethyl-isovalerat, Diethyl-malonat, Diethylsuccinat, Methyl-pelargonat, Butylacetat, Triethylphosphat, Ethylglykolacetat, Toluol, Xylol, Tetralin, Benzin-Fraktionen. Beispiele für feste Wachse als Lösungsmittel sind Stearin- oder Palmitinsäure.

Solche Tinten auf Lösungsmittel-Basis enthalten darin lösliche Farbstoffe wie z.B. Solvent Rot, Solvent Gelb, Solvent Orange, Solvent Blau, Solvent Grün, Solvent Violett, Solvent Braun oder Solvent Schwarz. Auch solche Tinten können noch weitere Additive enthalten, wie sie oben für wässrige Tinten aufgeführt sind.

Ein besonderes Problem der Lichtechtheit kann auftreten, wenn beim Tintenstrahldruck eine Tinte über eine andere gespritzt wird, da in solchen Fällen häufig die Lichtechtheit der gedruckten Mischfarbe schlechter ist als jene der einzelnen Tinten. Dieses Problem tritt besonders bei Verwendung von Cu-Phthalocyaninfarbstoffen wie Direct Blue 86 und Direct Blue 199 in Kombination mit Azofarbstoffen wie Acid Red 35, Acid Red 249 und Direct Red 227 auf. Durch Imprägnieren des Trägers mit den Verbindungen der Formel I lässt sich dieser unerwünschte Effekt weitgehend unterdrücken.

Die Verbindungen der Formel I können nach aus der Literatur bekannten Verfahren hergestellt werden. Ausgangsmaterialien sind z.B. Polyhydroxybenzole wie Catechol-, Resorcinol-, Hydrochinon- und Pyrogallolderivate. Diese können z.B. durch Umsetzung der entsprechenden Phenolate mit C0₂ carboxyliert werden, oder man erreicht diese Stufe durch Formylierung und anschliessende Oxidation. Sulfonierung mit Schwefelsäure oder Chlorsulfonsäure erlaubt die Einführung von Sulfonsäuregruppen an den Benzolring. Carboxyalkylgruppen können durch Alkylierung der phenolischen Hydroxylgruppen eingeführt werden, indem man Halogencarbonsäureester wie Methylchloracetat, Aethylbromacetat oder Methyl-3-brompropio- nat verwendet, ferner mittels olefinischer Alkylierungsmittel wie Methyl- oder Aethyl(meth)acrylat, Dimethylmaleat oder -fumarat, Maleinsäure- oder Itaconsäureanhydrid usw., oder auch mittels Epoxidverbindungen wie Methyl-2,3-epoxypropionat oder Dimethyl-2,3-epoxysuccinat und Verseifung der Esterfunktion. Die Verwendung von Halogen-, Epoxy- oder Olefin-Alkylsulfonsäurederivaten wie 3-Brom-2-hydroxypropansul- fonsäure, 3-Chlorpropansulfonsäure, 2,3-Epoxypropansulfonsäure, Alkylsulfonsäure, Dimethylalkylsulfonsäure oder Sulfonsäurelactone wie 1,3-Propansulfon erlauben die direkte Einführung von Sulfonylgruppen. Allylische Substituenten können über die Claisen-Umlagerung der entsprechenden Allyläther direkt an den Benzolring gebunden werden. An die darin enthaltene Doppelbindung können dann weitere funktionelle Gruppen addiert werden, z.B. durch Sulfonierung, Halogenierung oder Epoxydierung gefolgt von der Umsetzung mit Natriumsulfit oder Trialkylphosphiten, was einer direkten Einführung einer Sulfo- bzw. Phosphorsäuregruppe gleichkommt. Die phenolischen Hydroxylgruppen können mit einer Vielzahl von Alkylierungsmitteln alkyliert werden, wie z.B. Alkyl-, Alkenyl- oder Alkinylhalogeniden, Dialkylsulfaten oder Alkylphosphonsäureestern, also beispielsweise mit Methyliodid, Aethylbromid, Propyl- oder Butylchlorid, Dimethyl- und Diäthylsulfat, Alkylbromid, Dimethylalkylbromid, Propargylbromid usw. Quaternäre Ammoniumgruppen können erhalten werden durch Quaternierung von Aminen durch Verwendung der obengenannten Alkylierungsmittel. Alkoxygruppen können eingeführt werden durch Halogenierung und Substitution des Halogenatoms mit Alkoholat. Mono- und Polycarbonsäurederivate können beispielsweise durch Metallierung der entsprechenden Mono- oder Polyalkoxybenzole mit z.B. Alkyllithium oder Grignardreagens und anschliessender Umsetzung mit C0₂ hergestellt werden.

Die nachfolgenden Beispiele erläutern die Erfindung weiter. Darin und in der übrigen Beschreibung bedeuten Teile- und Prozentangaben Gewichtsteile und Gewichtsprozente, sofern nichts anderes angegeben ist.

Beispiel 1: Es werden Beschichtungsmassen auf der Basis Silika/Polyvinylalkohol mit und ohne Stabilisatoren der Formel I hergestellt. Zu jeweils 16,4 g einer 10 %igen Lösung von Polivinylalkohol (Riedel de Haen GmbH) werden 0,2 g einer 10 %igen Lösung von Invadin@ JFC Netzmittel (Ciba-Geigy AG), 19 g Wasser und 0,22 g Stabilisator der Formel I zugegeben. Die Mischung wird gerührt und erwärmt, bis der Stabilisator sich gelöst hat. Anschliessend werden 2,0 g Silika (Syloid @ Typ 244, Grace und Co.) zugesetzt und mit Hilfe von Ultraschall dispergiert. Die resultierende Beschichtungsmasse wird durch ein Sieb aus Polyesterfasern mit der Maschenweite 24 um filtriert. Der pH wird durch Zusatz von 2N Natronalauge auf 7,0 eingestellt. Die Blindprobe ohne Stabilisator enthält anstelle von 0,22 g Stabilisator die gleiche Menge Wasser.

Die Beschichtungsmassen werden mit einer Drahtspirale auf photographisches Papier in einer Dicke von 50 um aufgetragen. Die nach dem Trocknen mit warmer Luft erhaltene Beschichtung hat eine Trockenmasse von etwa 5,3 g/m² (bzw. 5,0 g/m² ohne Stabilisator) und enthält 0,3 g/m² Stabilisator.

Das so präparierte Aufzeichnungsmaterial wird jeweils mit einer gelben und einer purpurroten Tinte in einer sogenannten "Think-jet" Tintenstrahldruckvorrichtung (Hewlett-Packard) bedruckt. Die gelbe Tinte enthält:
5 Teile C.I. Acid Yellow 23
50 Teile Diethyleneglykol
45 Teile Wasser
   Eine purpur-rote Tinte wird analog hergestellt, jedoch unter Verwendung von C.I. Acid Red 35. Die Tinten werden durch einen Ultrafilter mit 0,3 um Porenweite filtriert und in die Tintenpatronen des Geräts "Think-jet" gefüllt. Es werden bedruckte Proben mit einer Punktdichte von 192 x 96 Punkten pro Inch² hergestellt.

Nach einer Woche Lagerung, um die Tinten völlig auszutrocknen, wird die Farbdichte (Intensität) der bedruckten Proben mit einem Densitometer (Macbeth TR 924) unter Verwendung eines Status A-Filters bestimmt. Dann werden die Probedrucke in einem Atlas Weather-o-meter mit einer Xenon-Lampe einer Beleuchtungsstärke von 81 klux hinter einem Filter aus 6 mm dickem Fensterglas bestrahlt. Anschliessend wird erneut die Farbdichte gemessen, um den prozentualen Verlust an Farbdichte zu ermitteln.

Die Ergebnisse sind in der nachfolgenden Tabelle 1 zusammengefasst. Niedrigere Werte bedeuten höhere Lichtechtheit.

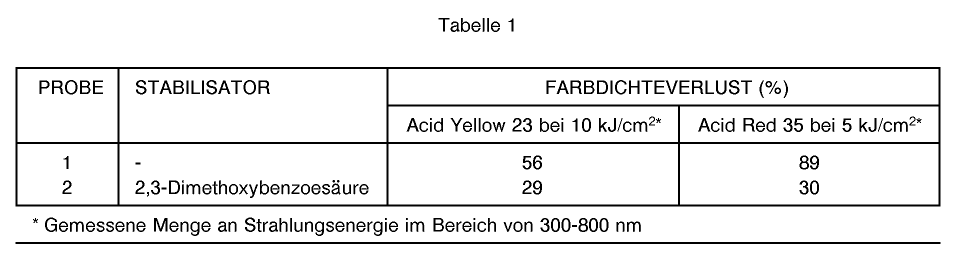

Beispiel 2: Auch Tintenstrahldruckpapieren, die Beizmittel zur Erhöhung der Wasserbeständigkeit erhalten, kann durch Verwendung von Verbindungen der Formel I Lichtschutz verliehen werden.

Man stellt Beschichtungsmassen her, die aus 14,2 g einer 10%igen Lösung von Polyvinylalkohol (Riedel de Haen GmbH), 0,2 g einer 10%igen Lösung von Invadin@ JFC (Ciba-Geigy AG), 0,4 g Polyfix 601@ als Beizmittel (Showa High Polymer Co.), 0,22 g Stabilisator der Formel I, 20,7 g Wasser und 2,0 g Silika besteht, wie dies in Beispiel 1 beschrieben ist. Die Blindprobe ohne Stabilisator enthält statt 0,22 g Stabilisator die gleiche Menge Wasser. Die Beschichtungsmassen werden gemäss Beispiel 1 auf einen photographischen Papierträger gegossen, getrocknet und mit Tinten bedruckt, die die Farbstoffe C.I. Acid Red 249, C.I. Acid Yellow bzw. C.I. Food Black 2 enthalten. Die Herstellung dieser Tinten erfolgt wie in Beispiel 1 angegeben. Die Ergebnisse der Lichtechtheitsprüfung der bedruckten Papiere sind in den nachfolgenden Tabellen 2 bis 5 zusammengefasst.

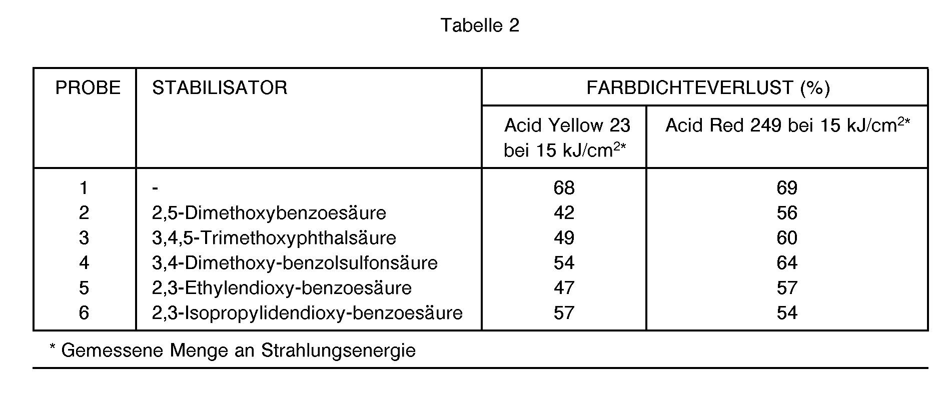

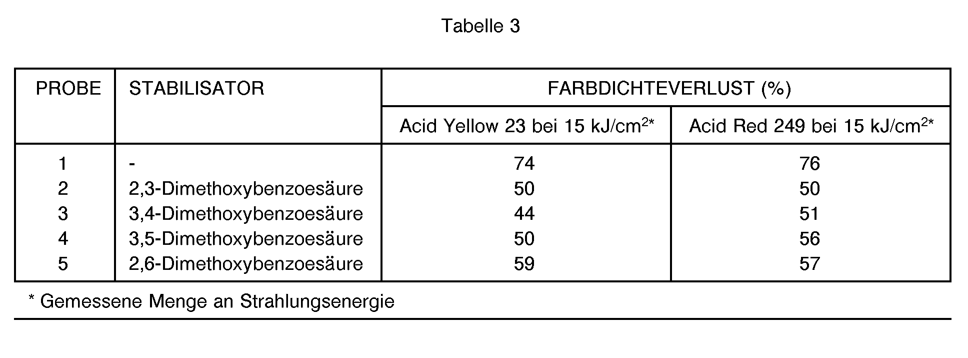

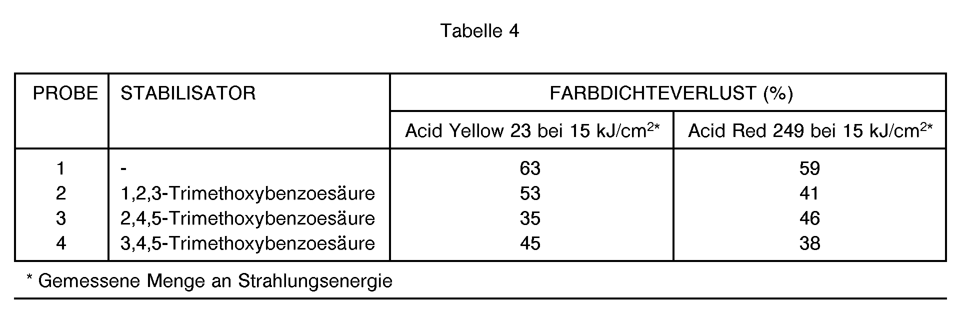

Zu den Tabellen 2 bis 4 ist zu bemerken, dass sie aus verschiedenen Versuchsreihen stammen und die Absolutwerte aus verschiedenen Tabellen nicht direkt vergleichbar sind. Verschiedene Parameter wie Trocknungsgrad, Trocknungszeit des Papiers, Inhomogenitäten beim Auftragen usw. können zu verschiedenen Absolutwerten des Farbdichteverlusts führen. Es ist jedoch deutlich zu erkennen, dass innerhalb der veschiedenen Versuchsreihen die erfindungsgemässen Stabilisatoren den Farbdichteverlust wesentlich verringern.

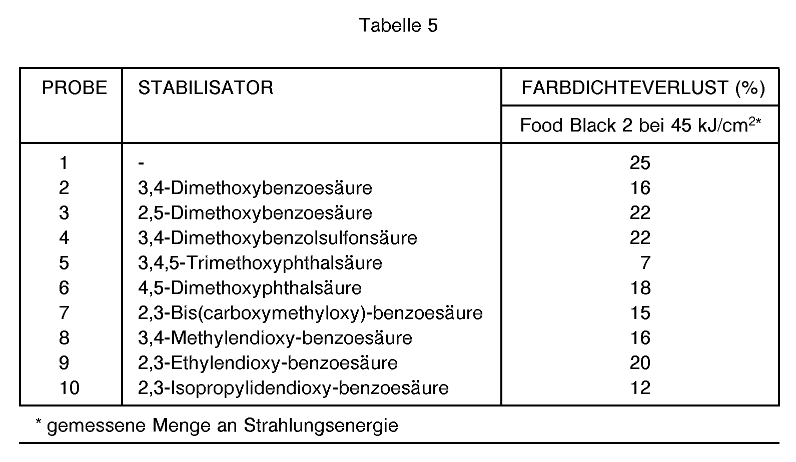

Beispiel 3: Setzt man in den Beispielen 1 und 2 als Stabilisatoren die folgenden Verbindungen ein, kann der Farbdichteverlust in ähnlicher Weise reduziert werden:

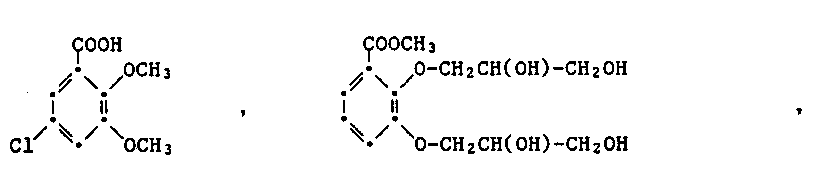

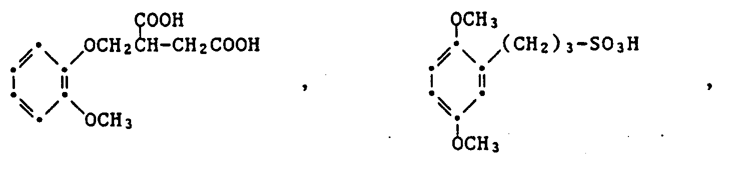

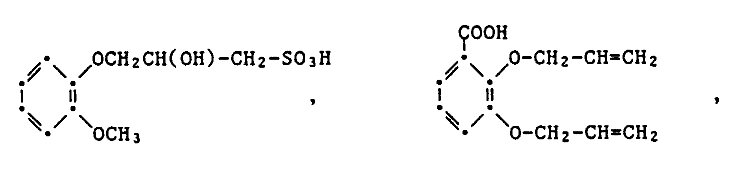

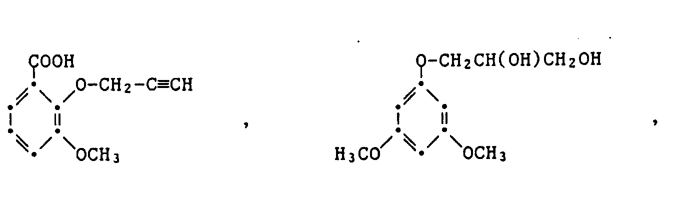

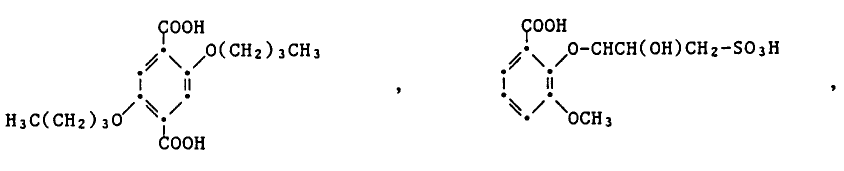

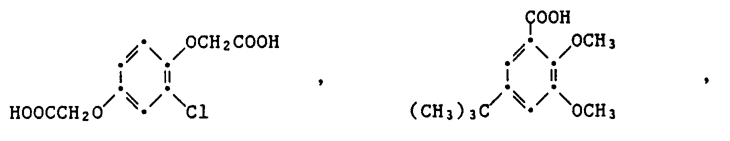

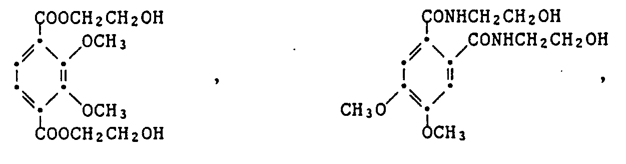

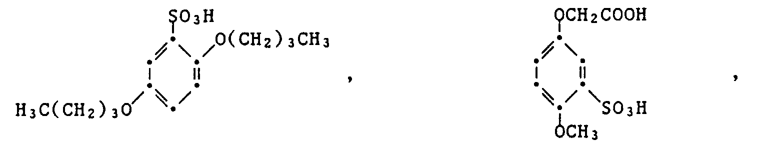

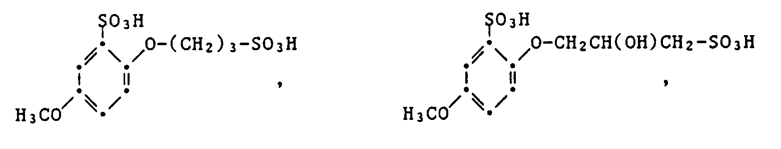

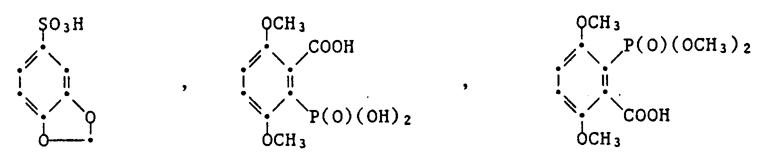

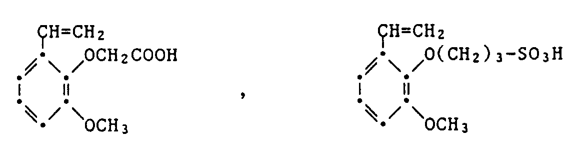

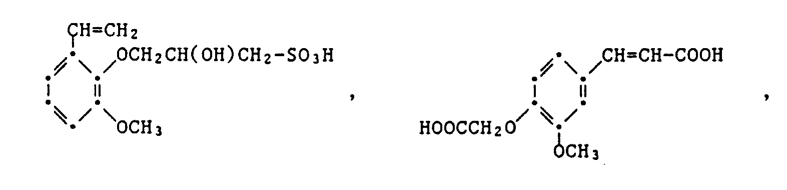

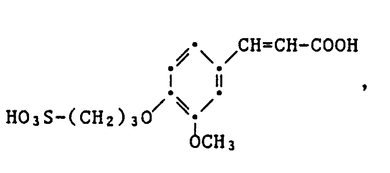

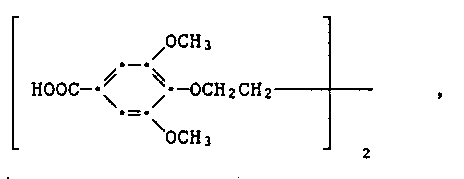

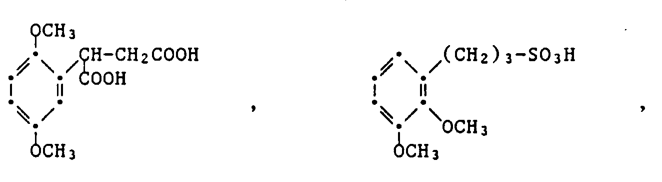

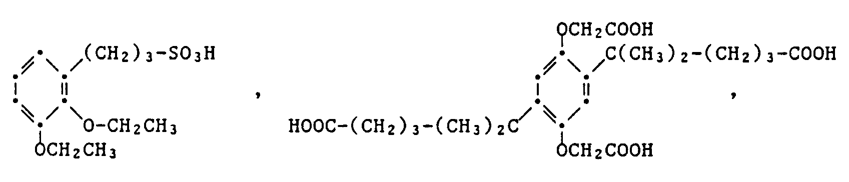

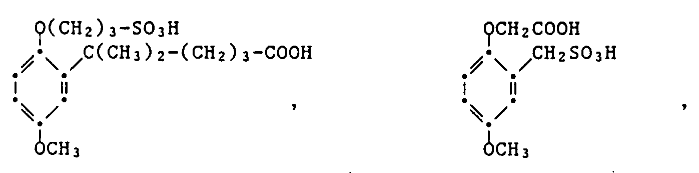

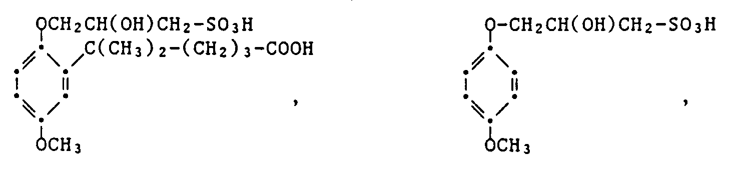

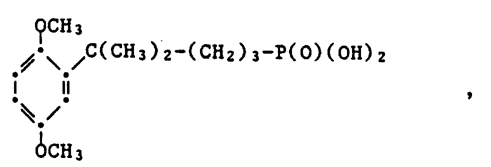

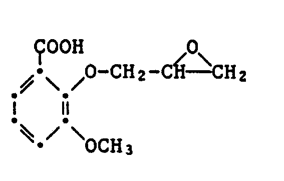

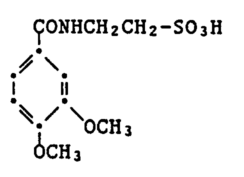

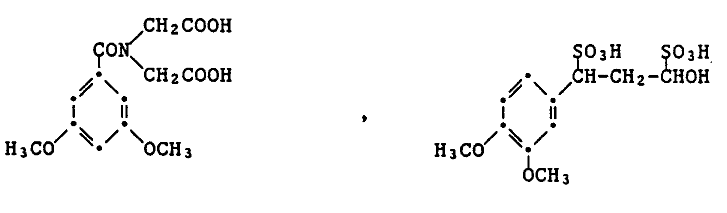

Beispiel 4: Es werden Tintenstrahldruckpapiere wie in Beispiel 2 angegeben hergestellt, mit der Ausnahme, dass anstelle von Natronlauge Lithiumhydroxyd für die Neutralisation der Beschichtungsmasse verwendet wird.

Bedruckt werden die Papiere mit Tinten, die aus 4 % Farbstoff, 48 % Diäthylenglykol und 48 % Wasser bestehen. Als Farbstoff verwendet man C.I. Acid Yellow 23, C.I. Acid Red 35, C.I. Acid Blue 9 bzw. C.I. Food Black: Die Ergebnisse sind in den Tabellen 8 und 9 zusammengestellt.

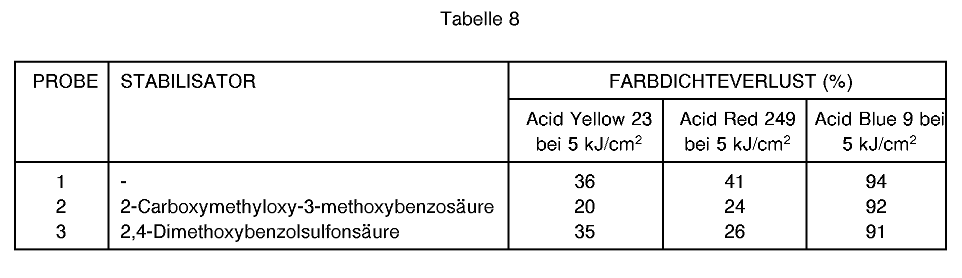

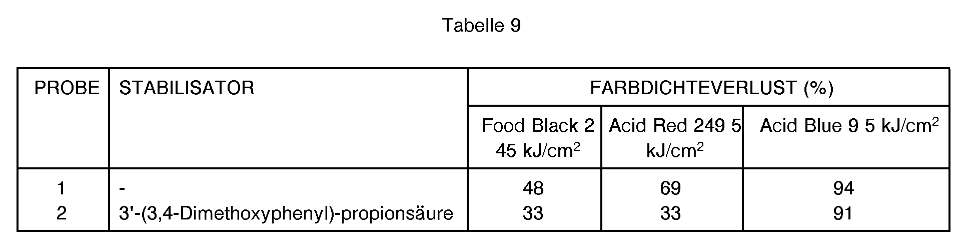

Beispiel 5: Es werden Beschichtungsmassen auf der Basis Silika/Polyvinylalkohol mit und ohne Stabilisator der Formel I hergestellt. Zu jeweils 14,8 g einer 10%igen Lösung von Polyvinylalkohol (Riedel de Haen GmbH) werden 0,2 g einer 10%igen Lösung von Invadin@ JFC (Ciba-Geigy AG) als Netzmittel, 15,8 g Wasser, 0,3 g Polyfix 601@ (Showa High Polymer Co.) als Beizmittel und 0,6 g Stabilisator der Formel I zugegeben. Die Mischung wird erwärmt und gerührt bis der Stabilisator gelöst ist. Anschliessend werden 2,0 g Silika (Typ 244, W.R. Grace Co.) zugesetzt und mit Ultraschall dispergiert. Die Beschichtungsmasse wird durch ein Polyestersieb der Maschenweite 24 um filtriert und auf einen pH-Wert von 7,0 durch Zugabe von Lithiumhydroxid gestellt. Die Beschichtungsmasse wird mit einer Drahtspirale auf polyäthylenbeschichtetes Papier aufgetragen und getrocknet. Das so hergestellte Papier besitzt einen Schichtauftrag von 8 g/m² bzw. 1 g Stabilisator/m^{2.} Nun werden Tinten hergestellt, die aus 4 % Farbstoff, 48 % Diäthylenglykol und 48 % Wasser bestehen. Als Farbstoff verwendet man Acid Yellow 23, Acid Red 35, Acid Red 249, Direct Red 227, Acid Blue 9, Direct Blue 86, Direct Blue 199 bzw. Food Black 2. Wie in Beispiel 1 beschrieben, bedruckt man mit diesen Tinten das Papier und prüft anschliessend die Lichtechtheit der Tinten. Die Ergebnisse sind aus Tabelle 10 ersichtlich.

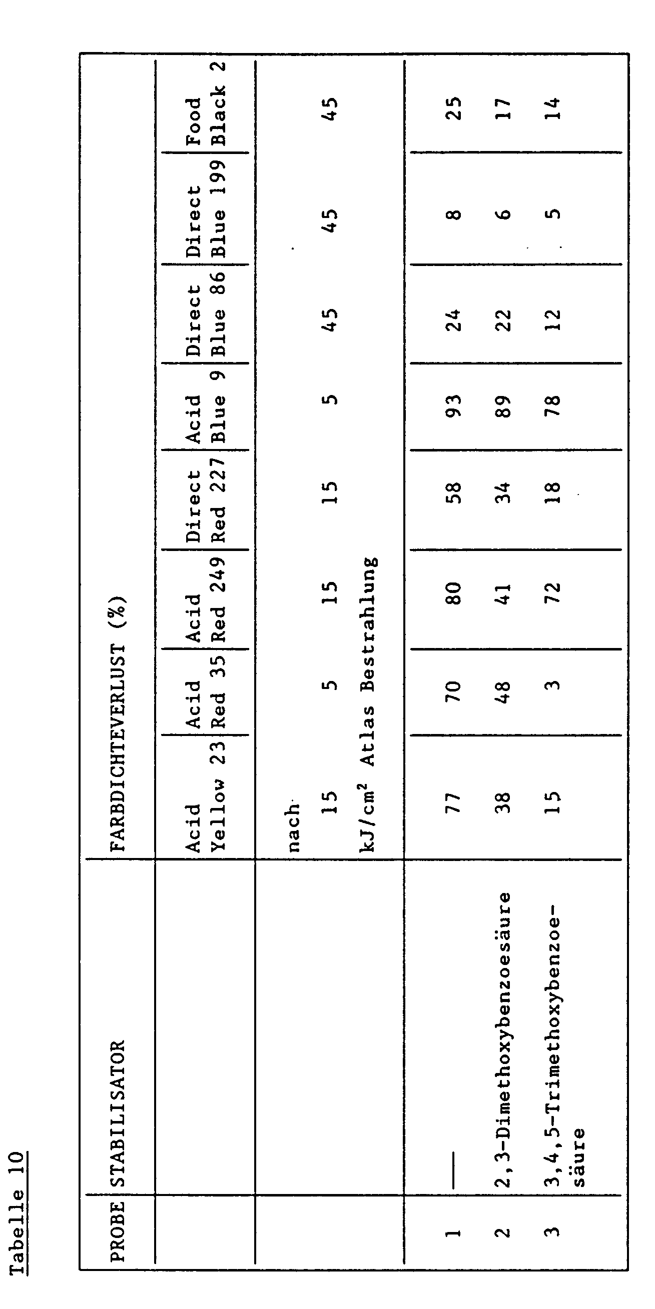

Beispiel 6: Gemäss Beispiel 2 werden Tintenstrahldruckpapiere hergestellt, die Verbindungen der Formel I enthalten, wie dort beschrieben, bedruckt und auf Lichtechtheit geprüft. Die verwendeten Tinten, die wie in Beispiel 2 hergestellt werden, enthalten die Farbstoffe Acid Yellow 23, Acid Red 249, Direct Red 227 bzw. Acid Blue 9. Die Ergebnisse sind in den Tabellen 11 bis 14 zusammengefasst.

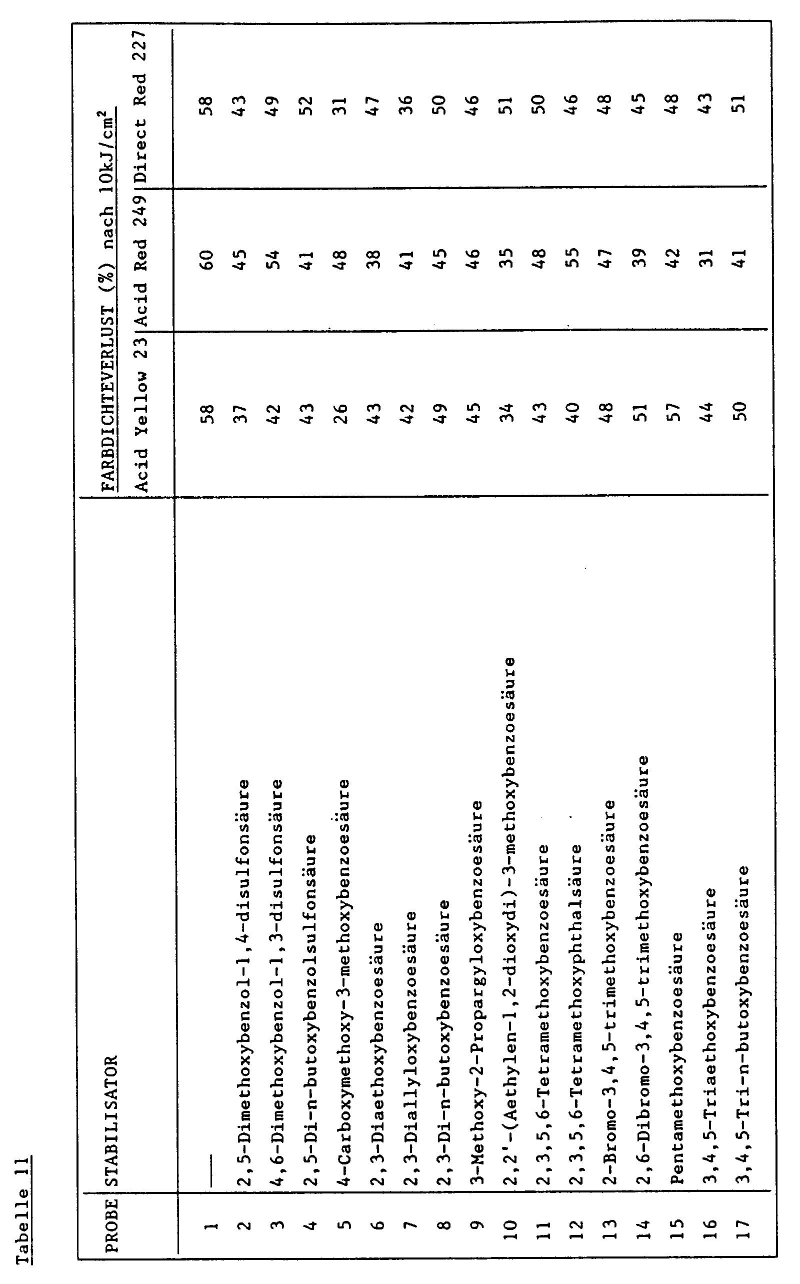

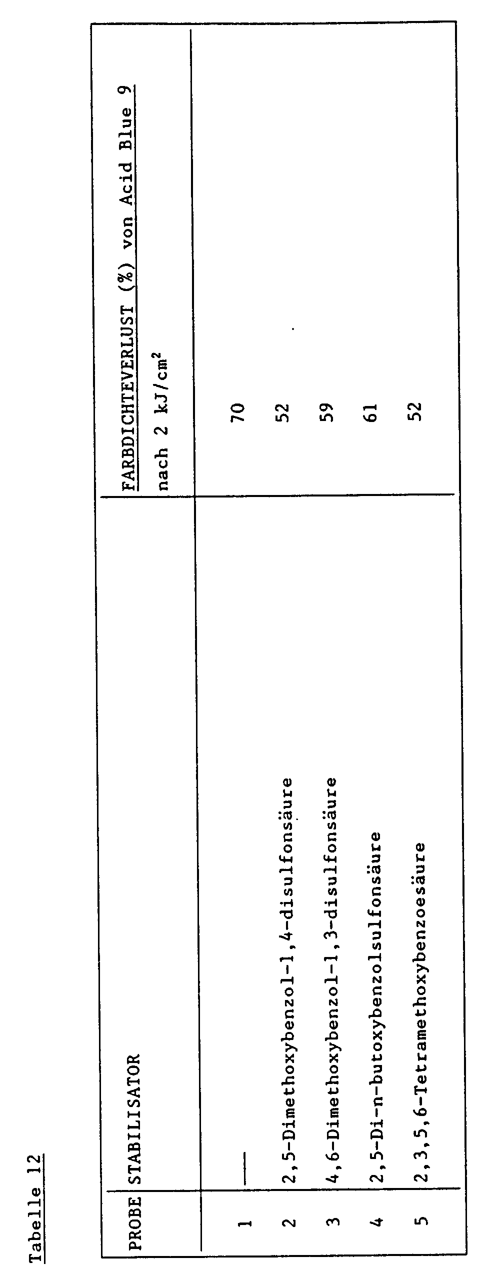

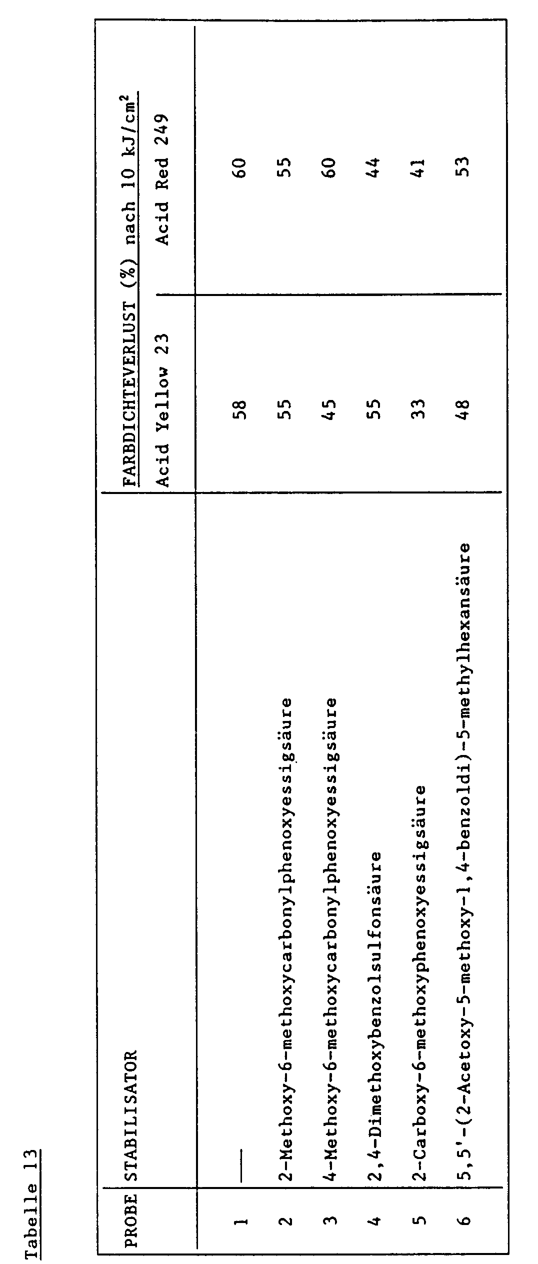

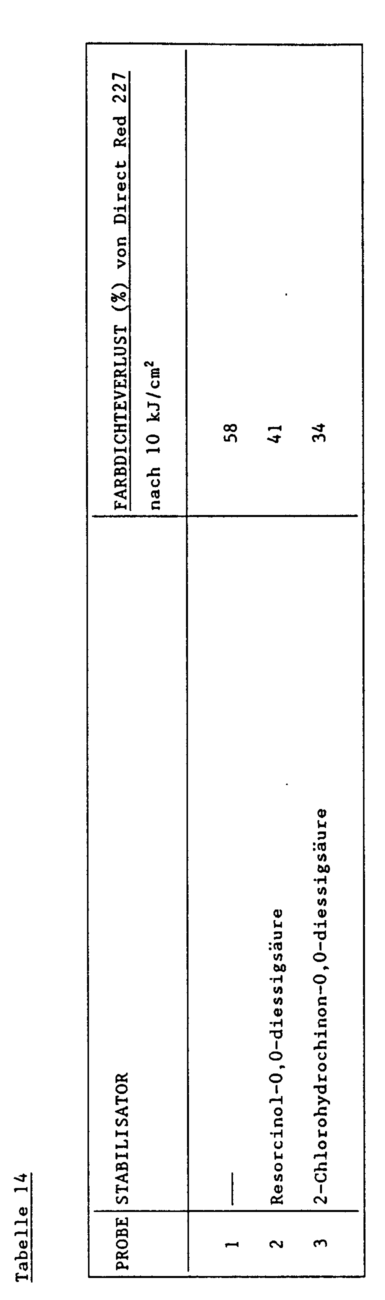

## Patentansprüche

1. Aufzeichnungsmaterial für Tintenstrahldruck enthaltend als Stabilisator mindestens eine Verbindung der Formel I 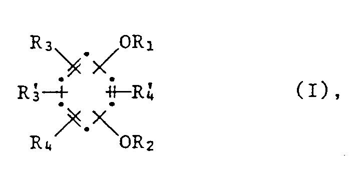 worin
R₁ und R₂ unabhängig voneinander C₁-C₄-Alkyl, welches gegebenenfalls mit einem oder 2 -OH,
-COO^{⊖}M^{⊕} und/oder -S0^{⊖}₃ M^{⊕} substituiert ist, C₃-C₅-Alkenyl, C₃-C₅-Alkinyl, 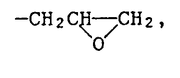 -CH₂CH(OH)CH₂-S0^{⊖}₃ M^{⊕}, oder -CO-Alkyl-(C₁-C₄) bedeuten, welches gegebenenfalls mit -COORs oder -CO-N(R₅)(R₆) substituiert ist, oder, falls OR₁ und OR₂ in ortho-Stellung zueinander stehen, R₁ und R₂ zusammen für C₁-C₆-Alkylen stehen, wobei
M^{⊕} für H^{⊕}, ein ein-, zwei- oder dreiwertiges Metallkation oder eine Gruppe (R₁₂) 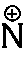 (R''12)(R'₁₃ )(R₁₄') steht, worin R₁₂', R''12, R₁₃'
und R₁₄' unabhängig voneinander H, C₁-C₄-Alkyl, welches gegebenenfalls mit 1 bis 3 OH substituiert oder durch ein O unterbrochen ist, Allyl, Cyclopentyl, Cyclohexyl, Phenyl, Benzyl oder Tolyl sind, oder R₁ auch für eine Gruppe 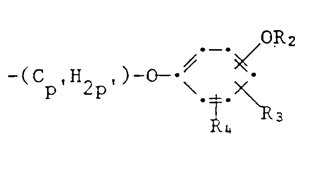 stehen kann, worin p' eine Zahl von 2 bis 6 ist,
R₅ und R6 unabhängig voneinander H oder C₁-C₄-Alkyl, welches gegebenenfalls mit einem OH, COOR°, COO^{⊖}M^{⊕}, S0^{⊖}₃ M^{⊕}, P(O)(OR°)₂ oder P(O)(O^{⊖}M^{⊕})₂ substituiert ist, bedeuten,
R3 und R'₄ unabhängig voneinander H, C₁-C₄-Alkyl, OH oder C₁-C₄-Alkoxy bedeuten,
R₃ und R₄ unabhängig voneinander H, Halogen, -0R₇, -COOR°, -COO^{⊖}M^{⊕},-OOC-R₅, -CO-N(R₅)(R₆),
-(R₅)N-CO-R₆, -CO-R₅, -S0^{⊖}₃ M^{⊕}, -S0₂N(R₅)(R₆), -P(OR₅)₃, -(O)P(̵OR°)2, -(O)P-(O^{⊖}M^{⊕})₂, C₁-C₈-Alkyl, welches gegebenenfalls mit 1 bis 7 -ORs oder -OOC-Rs, mit 1 oder 2 -COOR°, COO^{⊖}M^{⊕}, -CO-N(R₅)-(R₆) oder mit einem oder zwei -S0^{⊖}₃ M^{⊕}, -S0₂N(R₅)(R₆), -(O)PfOR°)₂ oder -(O)P-(O^{⊖}M^{⊕})₂ substituiert ist, oder Allyl oder C₅-C₆-Cycloalkyl bedeutet, wobei M^{⊕}, R₅ und R₆ die angegebene Bedeutung haben und
R° ein gegebenenfalls mit einem -OH substituiertes C₁-C₄-Alkyl oder (̵CH₂CH₂0)̵ᵣH, worin r 1 bis 12 ist, bedeutet,
R₇ ein gegebenenfalls mit 1 oder 2 -OH substituiertes C₁-C₄-Alkyl oder -CO-Alkyl(C₁-C₄), bedeutet, oder
R₃ und R₄ unabhängig voneinander eine der Gruppen der Formeln II-IV bedeuten 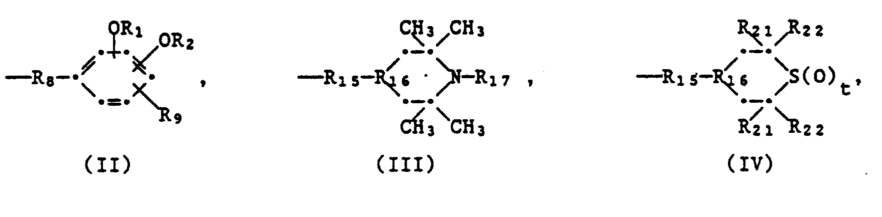 wobei
R₈ eine direkte Bindung oder Methylen ist, R₉ H, C₁-C₈-Alkyl, -COO^{⊖}M^{⊕} oder -S0^{⊖}₃ M^{⊕} ist, worin M^{⊕} und R₁ und R₂ die angegebene Bedeutung haben, R₁₅ -CO-, 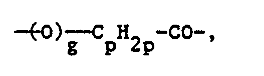 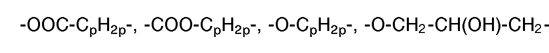 oder 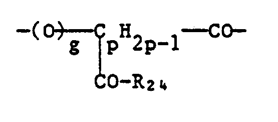 bedeutet, wobei g 0 oder 1 und p 1 bis 6 ist,
R₂₄ -OR₅, -N(R₅)(R₆) oder eine Gruppe 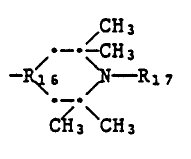 ist,
R₁₆ für einen der folgenden Reste steht: 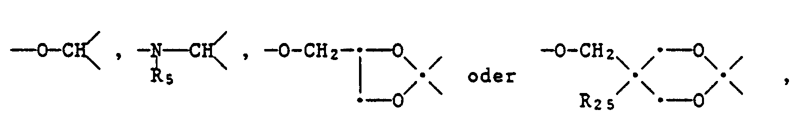 wobei R₂₅ H oder C₁-C₄-Alkyl bedeutet,
R₁₇ H, C₁-C₄-Alkyl, welches gegebenenfalls mit einem -OH substituiert ist, -CH₂-CH(OH)-CH₂-OH, C₁-C₈-Alkoxy, -OH, -CO-Alkyl(C₁-C₄), -COCH = CH₂, Allyl, Benzyl oder eine Gruppe 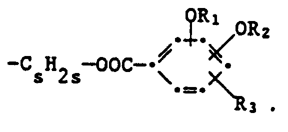 bedeutet, wobei s für die Zahl 2 oder 3,
t für eine Zahl von 0 bis 2 steht, und
R₂₁ und R₂₂ unabhängig voneinander H, C₁-C₄Alkyl oder Phenyl bedeuten,

2. Aufzeichnungsmaterial gemäss Anspruch 1, enthaltend als Stabilisator mindestens eine Verbindung der Formel I' 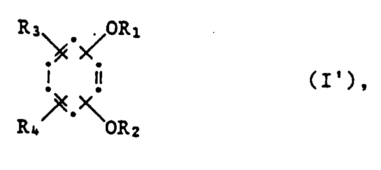 worin
R₁ und R₂ unabhängig voneinander C₁-C₄-Alkyl, welches gegebenenfalls mit einem oder 2 -OH, -COO^{⊖}M^{⊕} und/oder -S0^{⊖}₃ M^{⊕} substituiert ist,
-CH₂CH(OH)CH₂-S0^{⊖}₃ M^{⊕} oder -CO-Alkyl(C₁-C₄) sind, wobei M^{⊕} für H^{⊕}, ein ein-, zwei- oder dreiwertiges Metallkation oder eine Gruppe (R₁₂ ) 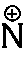 (R''12)(R'₁₃)(R'₁₄ ) steht,
R₅ und R₆ unabhängig voneinander H oder C₁-C₄-Alkyl, welches gegebenenfalls mit einem OH substituiert ist, bedeuten, R₃ und R₄ unabhängig voneinander H, Halogen, -0R₇, -COOR°, -COO^{⊖}M^{⊕},-OOC-Rs, -CO-N(R₅)(R₆), -(R5)N-CO-R6, -CO-Rs, -S0^{⊖}₃ M", -S0₂N(R₅)(R₆), -P(OR5)3, -(O)P(̵OR°)₂, -(O)-P-(O^{⊖}M^{⊕})₂, C₁-C₈-Alkyl, welches gegebenenfalls mit 1 bis 7 -ORs oder -OOC-Rs, mit 1 oder 2 -COOR°,
-COO^{⊖}M^{⊕}, -CO-N(R₅)(R₆) oder mit einem -S0^{⊖}₃ M^{⊕}, -S0₂N(R₅)(R₆) -(O)PfOR°)₂ oder -(O)P(O^{⊖}M^{⊕})₂ substituiert ist, sind,
wobei M^{⊕}, R₅ und R₆ die angegebene Bedeutung haben und
R° ein gegebenenfalls mit einem -OH substituiertes C₁-C₄-Alkyl oder (̵CH₂CH₂0)̵ᵣH worin r 1 bis 12 ist, bedeutet, und
R₇ ein gegebenenfalls mit 1 oder 2 -OH substituiertes C₁-C₄-Alkyl bedeutet, oder
R₃ und R₄ unabhängig voneinander eine Gruppe der Formel II 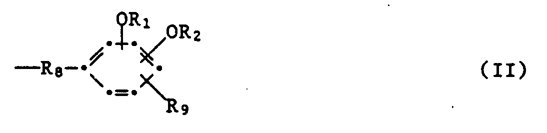 bedeuten, wobei
R₈ eine direkte Bindung oder Methylen ist, R₉ H, C₁-C₈-Alkyl, COO^{⊖}M^{⊕} oder -S0^{⊖}₃ M^{⊕} ist, worin M^{⊕} die angegebene Bedeutung hat, ist, und R₁ und R₂ die angegebene Bedeutung haben.

3. Aufzeichnungsmaterial gemäss Anspruch 1, worin R₁ und R₂ unabhängig voneinander C₁-C₄-Alkyl, Allyl, C₂-C₄-Hydroxyalkyl, -C₁-C₄-Alkyl-C00^{⊖}M^{⊕},-CH₂CH(OH)CH₂-S0^{⊖}₃ M'oder -CO-Alkyl(C₁-C₄) bedeuten oder worin R₁ eine Gruppe der Formel 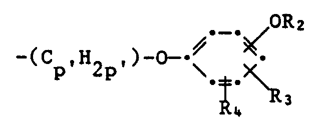 ist.

4. Aufzeichnungsmaterial gemäss Anspruch 3, worin R₁ und R₂ unabhängig voneinander Methyl, Ethyl, Allyl, -CH₂CH₂-OH, -CH₂COO^{⊖}M^{⊕}, -CH₂CH(OH)CH₃ oder -CH₂CH(OH)CH₂(OH) bedeuten.

5. Aufzeichnungsmaterial gemäss Anspruch 1, worin R₃ und R₄ unabhängig voneinander H, Halogen, -OR₇, -COOR°, -COO^{⊖}M^{⊕}, -CO-N(R₅)(R₆), -S0₃^{⊖}M^{⊕} -S0₂N(R₅)(R₆), C₁-C₈-Alkyl, das gegebenenfalls mit -COO^{⊖}M^{⊕} substituiert ist, oder Allyl bedeuten.

6. Aufzeichnungsmaterial gemäss Anspruch 1, worin R₃ und/oder R₄ den Rest -OR₇ bedeuten, wobei R₇ für C₁-C₄-Alkyl, C₂-C₄-Hydroxyalkyl oder -CH₂-CH(OH)CH₂-OH steht.

7. Aufzeichnungsmaterial gemäss Anspruch 1, worin R₁ und R₂ für CH₃ stehen, R₃ für -COO^{⊖}M^{⊕} und R₄ für Methoxy steht.

8. Aufzeichnungsmaterial gemäss Anspruch 1, worin R₁ und R₂ unabhängig voneinander, C₁-C₄-Alkyl oder mit -COO^{⊖}M^{⊕} substituiertes C₁-C₄-Alkyl oder R₁ und R₂ zusammen C₁-C₄-Alkylen bedeuten, R₃ und R₄ unabhängig voneinander H, COO^{⊖}M^{⊕}, C₁-C₄-Alkoxy, C₁-C₄-Alkyl-C00^{⊖}M^{⊕},C₁-C₄-Alkyl oder S0^{⊖}₃ M^{⊕} und R3 und R'₄ unabhängig voneinander H oder C₁-C₄-Alkoxy bedeuten.

9. Aufzeichnungsmaterial gemäss Anspruch 1, das zusätzlich einen UV-Absorber, insbesondere einen aus der 2-Hydroxyphenylbenztriazol-Klasse enthält.

10. Aufzeichnungsmaterial gemäss Anspruch 1, das zusätzlich ein kationisches Polymer oder ein kationisches Netzmittel enthält.

11. Aufzeichnungsmaterial nach Anspruch 1, das eine Schicht mit Si0₂ und Polyvinylalkohol enthält.

12. Aufzeichnungsmaterial nach Anspruch 1, das Cellulosefasern oder Textilfasern enthält.

13. Verwendung von Verbindungen der Formel I gemäss Anspruch 1 als Stabilisatoren für Aufzeichnungsmaterial für Tintenstrahldruck.

## Claims

1. A recording material for ink jet printing comprising as stabilizer at least one compound of the formula I 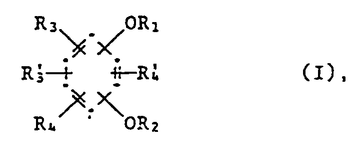 in which R₁ and R₂ independently of one another are C₁-C₄ alkyl which is unsubstituted or substituted by one or 2 -OH,-COO^{⊖}M^{⊕} and/or -S0₃^{⊖}M^{⊕} groups, C₃-Csalkenyl, C₃-Csalkynyl, 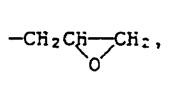 -CH₂CH(OH)CH₂-S0₃^{⊖}M^{⊕} or -CO-alkyl(C₁-C₄) which is unsubstituted or substituted by -COORₛ or -CON(R₅)(R₆) or, if OR₁ and OR₂ are in the ortho-position relative to one another, R₁ and R₂ together are C₁-C₆ alkylene, M^{⊕} being H^{⊕}, a monovalent, divalent or trivalent metal cation or a group (R₁ 2')N^{⊕}(R₁₂")-(R₁₃')(R₁₄'), in which R₁₂',R₁₂",R₁₃'
and R₁₄' independently of one another are H,C₁-C₄ alkyl which is unsubstituted or substituted by 1 to 3 OH or optionally interrupted by O, or are allyl, cyclopentyl, cyclohexyl, phenyl, benzyl or tolyl, or R₁ can also be a group 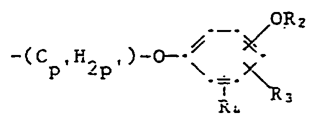
in which p' is a number from 2 to 6,
R₅ and R₆
independently of one another are H or C₁-C₄ alkyl which is unsubstituted or substituted by an OH, COOR ° , -COO^{⊖}M^{⊕}, SO₃^{⊖}M^{⊕}, P(O)(OR° )2 or P(O)(O^{⊖}M^{⊕})₂ group, R₃' and R₄' independently of one another are H, C₁-C₄ alkyl, OH or C₁-C₄ alkoxy, R₃ and R₄ independently of one another are H, halogen, -OR₇, -COOR° , -COO^{⊖}M^{⊕}, -OOC-R₅, -CO-N(R₅)(R₆), -(R5)N-CO-R6, -CO-R₅, S0₃^{⊖}M^{⊕},-SO₂N(R₅)(R₆), -P(OR₅)₃, -(O)P-(OR°)₂, -(O)P(O^{⊖}M^{⊕})₂, C₁-C₈ alkyl which is unsubstituted or substituted by 1 to 7 -ORₛ or -OOC-R₅ groups, by 1 or 2 -COOR°, -COO^{⊖}M^{⊕}, -CO-N(R₅)(R₆) groups or by one or two -S0₃^{⊖}M^{⊕}, -S0₂N(R₅(R₆), -(O)P-(OR°)₂ or -(O)P(O^{⊖}M^{⊕})₂ groups, or are allyl or C₅-C₆ cycloalkyl, where M^{⊕}, R₅ and R₆ are as defined above and R ° is C₁-C₄ alkyl which is unsubstituted or substituted by an -OH group or is -(CH₂CH₂0)-ᵣH in which r is 1 to 12, R₇ is C₁-C₄ alkyl or -CO-alkyl(C₁-C₄) each of which is unsubstituted or substituted by 1 or 2 -OH groups, or R₃ and R₄ independently of one another are one of the groups of the formulae II-IV 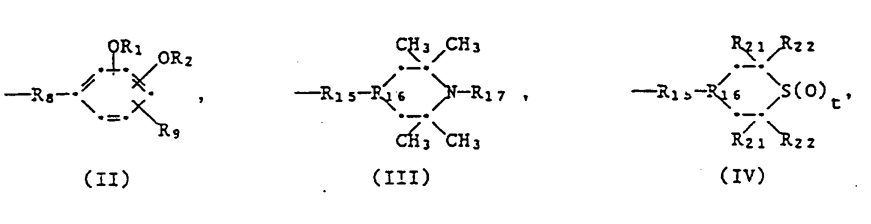 in which R₈ is a direct bond or methylene, R₉ is H, C₁-C₈ alkyl, -COO^{⊖}M^{⊕} or -SO₃^{⊖}M^{⊕}, in which M^{⊕}, R₁ and R₂ are as defined above,
R₁₅ is -CO-, -(O)g-CpH₂p-CO-, -OOC-CpH₂p-, -COO-CpH₂p-, -O-CₚH₂ₚ-, -O-CH₂-CH(OH)-CH₂- or 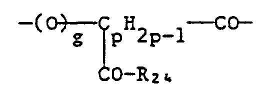 where g is 0 or 1 and p is 1 to 6,
R₂₄ is -OR₅, -N(R₅)(R₆) or a group 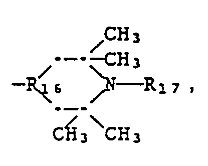 R₁₆ is one of the following radicals: 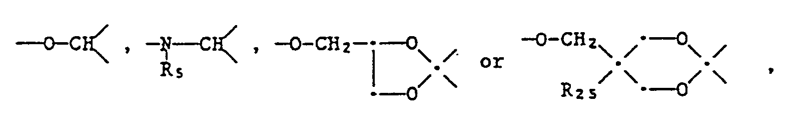 in which R₂₅ is H or C₁-C₄ alkyl,
R₁₇ is H, C₁-C₄ alkyl which is unsubstituted or substituted by an -OH group, -CH₂-CH(OH)-CH₂-OH, C₁-C₈ alkoxy, -OH, -CO-alkyl(C₁-C₄), -COCH=CH₂, allyl, benzyl or a group 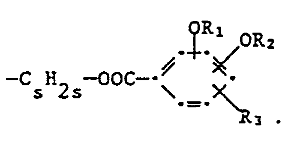 in which s is the number 2 or 3,
t is a number from 0 to 2 and
R₂₁ and R₂₂ independently of one another are H, C₁-C₄alkyl or phenyl.

2. A recording material according to claim 1, comprising as stabilizer at least one compound of the formula I' 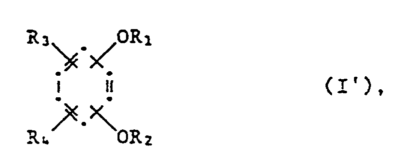 in which R₁ and R₂ independently of one another are C₁-C₄alkyl which is unsubstituted or substituted by one or 2 -OH, -COO^{⊖}M^{⊕} and/or -SO₃^{⊖}M^{⊕} groups, -CH₂CH(OH)CH₂-SO₃^{⊖}M^{⊕} or -CO-alkyl(C₁-C₄), in which M^{⊕} is H^{⊕}, a monovalent, divalent or trivalent metal cation or a group (R₁₂')N^{⊕}(R₁₂")(R₁₃')(R₁₄'), R₅ and R₆ independently of one another are H or C₁-C₄ alkyl which is unsubstituted or substituted by one OH group, R₃ and R₄ independently of one another are H, halogen, -OR₇, -COOR° , -COO^{⊖}M^{⊕},-OOC-R₅ , -CO-N(R₅)(R₆), -(R5)N-CO-R6, -CO-Rs, -SO₃^{⊖}M^{⊕}, -SO₂N(R₅)(R₆), -P(OR₅)₃, -(O)P-(OR°)₂, -(O)P-(O^{⊖}M^{⊕})₂, C₁-C₈alkyl which is unsubstituted or substituted by 1 to 7 -ORₛ or -OOC-R₅ groups, by 1 or 2 -COOR°, COO^{⊖}M^{⊕} or -CO-N(R₅)(R₆) groups or by an -SO₃^{⊖}M^{⊕}, S02N(Rs)(R6), -(O)P-(OR°)₂ or -(O)P(O^{⊖}M^{⊕})₂ group, where M^{⊕}, R₅ and R₆ are as defined and R ° is Ci-C4alkyl which is unsubstituted or substituted by an -OH group, or is -(CH₂CH₂O)-ᵣH in which r is 1 to 12, and R₇ is C₁-C₄alkyl which is unsubstituted or substituted by 1 or 2 -OH groups, or R₃ and R₄ independently of one another are a group of the formula II 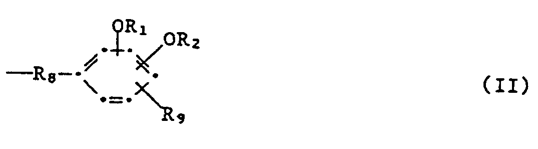 in which R₈ is a direct bond or methylene, R₉ is H, C₁-C₈ alkyl, COO^{⊖}M^{⊕} or - SO₃^{⊖}M^{⊕}, where M^{⊕} is as defined, and R₁ and R₂ are as defined.

3. A recording material according to claim 1, wherein R₁ and R₂ independently of one another are C₁-C₄alkyl, allyl, C₂-C₄hydroxyalkyl, -C₁-C₄alkyl-COO^{⊖}M^{⊕}, -CH₂CH(OH)CH₂-SO₃^{⊖}M^{⊕} or -CO-alkyl(C₁-C₄) or wherein R₁ is a group of the formula

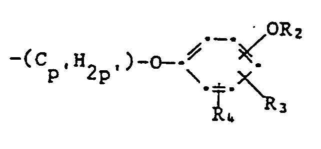

4. A recording material according to claim 3, wherein R₁ and R₂ independently of one another are methyl, ethyl, allyl, -CH₂CH₂-OH, -CH₂COO^{⊖}M^{⊕}, -CH₂CH(OH)CH₃ or -CH₂CH(OH)CH₂(OH).

5. A recording material according to claim 1, wherein R₃ and R₄ independently of one another are H, halogen, -OR₇, -COOR°, -COO^{⊖}M^{⊕},-CO-N(R₅)(R₆), -SO₃^{⊖}M^{⊕}, -S0₂N(R₅)(R₆), C₁-C₈ alkyl which is unsubstituted or substituted by -COO^{⊖}M^{⊕}, or are allyl.

6. A recording material according to claim 1, wherein R₃ and/or R₄ are the radical -OR₇ in which R₇ is C₁-C₄alkyl, C₂-C₄hydroxyalkyl or -CH₂-CH(OH)CH₂-OH.

7. A recording material according to claim 1, wherein R₁ and R₂ are CH₃ and R₃ is -COO^{⊖}M^{⊕} and R₄ is methoxy.

8. A recording material according to claim 1, wherein R₁ and R₂ independently of one another are Ci-C₄alkyl or C₁-C₄ alkyl which is substituted by -COO^{⊖}M^{⊕}, or R₁ and R₂ together are C₁-C₄ alkylene, R₃ and R₄ independently of one another are H, -COO^{⊖}M^{⊕}, C₁-C₄alkoxy, C₁-C₄alkyl-COO^{⊖}M^{⊕},C₁-C₄alkyl or SO₃^{⊖}M^{⊕} and R₃' and R₄' independently of one another are H or C₁-C₄ alkoxy.

9. A recording material according to claim 1, which additionally comprises a UV absorber, particularly one from the 2-hydroxyphenylbenzotriazole class.

10. A recording material according to claim 1, which additionally comprises a cationic polymer or a cationic wetting agent.

11. A recording material according to claim 1, which comprises a coating with Si0₂ and polyvinyl alcohol.

12. A recording material according to claim 1, which comprises cellulose fibres or textile fibres.

13. The use of a compound of the formula I according to claim 1 as stabilizer for recording material for ink jet printing.

## Revendications

1. Matériau d'enregistrement pour impression à jet d'encre contenant en tant que stabilisant au moins un composé de formule 1 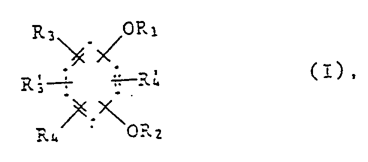 dans laquelle R₁ et R₂, indépendamment l'un de l'autre, représentent les alkyle en C₁-C₄ éventuellement substitué par un ou deux groupes -OH, -COO^{⊖}M^{⊕} et/ou -SO₃^{⊖}M^{⊕}, alcényle en C₃-C₅, alcynyle en C₃-C₅, 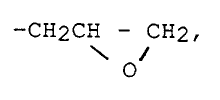 -CH₂CH(OH)CH₂-SO₃^{⊖}M^{⊕} ou -CO-(alkyle en C₁-C₄), lequel est éventuellement substitué par -COORₛ ou -CO-N(R₅)(R₆), ou, dans le cas où OR₁ et OR₂ sont en position ortho l'un par rapport à l'autre, R₁ et R₂ ensemble représentent un alkylène en C₁-C₆, M^{⊕} représentant H⁺, un cation d'un métal mono-, bi-ou trivalent ou un groupe (R_{12'})N⁺(R₁₂")(R₁₃')(R₁₄'), où R_{12'}, R_{12"}, R_{1 3}' et R₁₄', indépendamment l'un de l'autre représentent les H, alkyle en C₁-C₄, éventuellement substitué par un à trois groupes OH ou interrompu par un O, ou les groupes alkyle, cyclopentyle, cyclohexyle, phényle, benzyle ou tolyle, ou R₁ peut représenter aussi un groupe 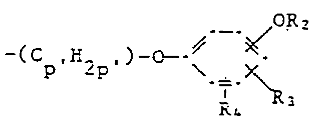 dans lequel p' est un nombre de 2 à 6,
R₅ et R₆ indépendamment l'un de l'autre représentent les H ou alkyle en C₁-C₄, éventuellement substitué par un groupe OH, COOR° , COO^{⊖}M^{⊕}, SO₃^{⊖}M^{⊕}, P(O)(OR°)₂ ou P(O)(O^{⊖}M^{⊕})₂,
R₃' et R₄' indépendamment l'un de l'autre représentent les H, alkyle en C₁-C₄, OH ou alcoxy en C₁-C₄, R₃ et R₄ indépendamment l'un de l'autre représentent les H, halogène, -OR₇, -COOR° , -COO^{⊖}M^{⊕},
-OOC-R₅, -CO-N(R₅)(R₆), -(R₅)N-CO-R₆, -CO-R₅, -SO₃^{⊖}M^{⊕}, -SO₂N(R₅)(R₆), -P(OR₅)₃, -(O)P-(OR°)₂ , -(O)P-(O^{⊖}M^{⊕})₂, alkyle en C₁-C₈, éventuellement substitué par 1 à 7 groupes -ORs ou -OOC-Rs, par 1 ou 2 -COOR°, COO^{⊖}M^{⊕}, -CO-N(R₅)(R₆) ou par un ou deux -SO₃^{⊖}M^{⊕},-SO₂N(R₅)(R₆), -(O)P-(OR°)₂ ou -(O)P-(O^{⊖}M^{⊕})₂, ou allyle ou les cycloalkyles en C₅-C₆, M^{⊕}, R₅ et R₆ ayant la signification donnée, et
R° signifie un -(CH₂CH₂O)ᵣ-H ou un alkyle en C₁-C₄ éventuellement substitué par un -OH, r représentant un nombre de 1 à 12,
R₇ représente les -CO-(alkyle en C₁-C₄) ou alkyle en C₁-C₄ éventuellement substitué par 1 ou 2 -OH, ou
R₃ et R₄ indépendamment l'un de l'autre représentent un des groupes de formules II - IV 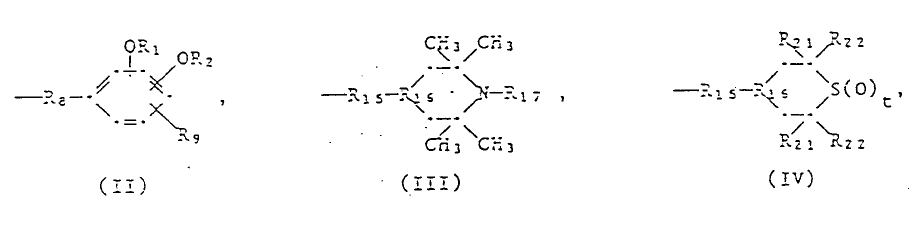 où
R₈ est une liaison directe ou le méthylène,
R₉ représente les H, alkyle en C₁-C₈, -COO^{⊖}M^{⊕} ou -SO₃^{⊖}M^{⊕},dans lequelles M^{⊕} et R₁ et R₂ ont la signification donnée,
R₁₅ représente -CO-, -(-O-)g-CpH₂p-CO, -OOC-CₚH₂ₚ- , -COO-CpH₂p-, -O-CₚH₂ₚ-, -0-CH₂-CH(OH)-CH₂-, ou 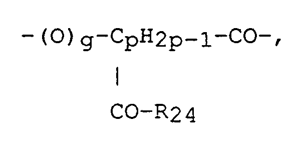 où g est 0 ou 1 et p va de 1 à 6
R₂₄ représente -ORs, N(R₅)(R₆), ou un groupe 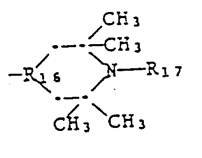
R₁₆ représente un des radicaux suivants : 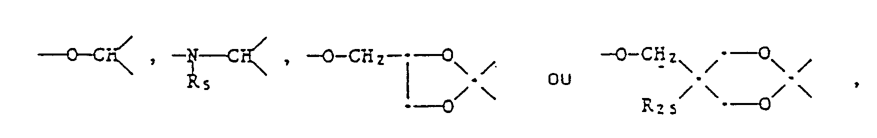 où R₂₅ signifie les H ou alkyle en C₁-C₄,
R₁₇ représente les H, alkyle en C₁-C₄, éventuellement substitué par un -OH, -CH₂-CH(OH)-CH₂-OH, alcoxy en C₁-C₈, -OH, -CO-(alkyl en C₁-C₄), -COCH = CH₂, allyle, benzyle ou un groupe 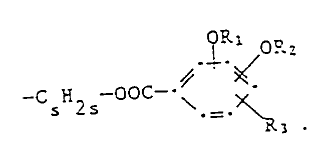 où
s représente les nombres 2 ou 3,
t représente les nombres de 0 à 2, et
R₂₁ et R₂₂, indépendamment l'un de l'autre, signifient les H, alkyle en C₁-C₄ ou phényle.

2. Matériau d'enregistrement selon la revendication 1, contenant en tant que stabilisant au moins un composé de formule l' 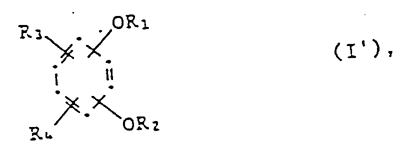 dans laquelle
R₁ et R₂, indépendamment l'un de l'autre, représentent un alkyle en C₁-C₄, éventuellement substitué par un ou deux groupes -OH, -COOM^{®} et/ou -SOa^{e}M^{®}, -CH₂CH(OH)CH₂2-S03 M^{®} ou
-CO-(alkyl en C,-C₄), M^{®} représentant H⁺, un cation d'un métal mono-, bi- ou trivalent ou un groupe (R₁₂')N⁺(R₁₂")(R₁₃')(R₁₄'),
R₅ et R₆ indépendamment l'un de l'autre représentent H ou un alkyle en C,-C₄, éventuellement substitué par un OH, R₃ et R₄ indépendamment l'un de l'autre représentent les H, halogène, -OR₇,
-COOR°, -COO^{e}M^{®}, -OOC-Rs , -CO-N(Rs )(R6 -(R5)N-CO-R6, -CO-Rs , SOa^{e}M^{®}, -S0₂ N(Rs )(R₆ -P-(OR₅)₃, -(O)P-(OR°)₂, -(O)P-(O^{e}M^{®})₂, un alkyle en G-Ca, éventuellement substitué par 1 à 7 -ORₛ ou
-OOC-R₅, par 1 ou 2 groupes -COOR°, -COO^{e}M^{®}, -CO-N(R₅)(R₆) ou par un -SOa^{e}M^{®}, -S0₂N(Rs)(R₆),
-(O)P-(OR°)₂ ou -(O)P(O^{⊖}M^{⊕})₂
M⁺, R₅ R₆ ayant les significations données, et
R° est un alkyle en C₁-C₄ éventuellement substitué par un -OH, ou -(CH₂CH₂O)ᵣ-H, où r va de 1 à 12, et
R₇ signifie un alkyle en C₁-C₄ éventuellement substitué par 1 ou 2 -OH, ou
R₃ et R₄ indépendamment l'un de l'autre signifient un groupe de formule II 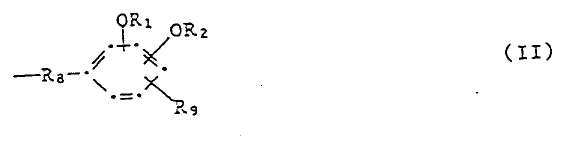
R₈ étant une liaison directe ou le méthylène,
R₉ étant H, un alkyle en C₁-C₈, COO⊖M⊕ ou -SO₃^{⊖}M^{⊕}, M^{⊕} ayant la signification donnée, et R₁ et R₂ ont la signification donnée.

3. Matériau d'enregistrement selon la revendication 1, où R₁ et R₂ indépendamment l'un de l'autre signifient les alkyles en C₁-C₄, allyle, hydroxyalkyle en C₂-C₄, (alkyle en C₁-C₄)-C00⊖M⊕, -CH₂-CH-(OH)CH₂-SOa⊖M⊕ ou -CO-(alkyl en C₁-C₄) ou dans lesquels R₁ représente un groupe de formule

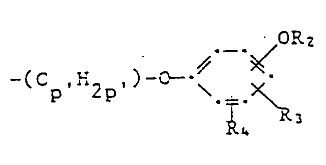

4. Matériau d'enregistrement selon la revendication 3, où R₁ et R₂ indépendamment l'un de l'autre représentent les méthyle, éthyle, allyle, -CH₂CH₂-OH, -CH₂COO⊖M⊕, -CH₂CH(OH)CH₃ ou -CH₂CH(OH)-CH₂(OH).

5. Matériau d'enregistrement selon la revendication 1, où R₃ et R₄ indépendamment l'un de l'autre représentent les H, halogène, -OR₇, -COOR°, -COO⊖M⊕, -CO-N(R₅)(R₆), -SO₃⊖M⊕, -SO₂N(R₅)(R₆), alkyle en C₁-C₈ qui peut être éventuellement substitué par -COO⊖M⊕, ou allyle.

6. Matériau d' enregistrement selon la revendication 1, où R₃ et/ou R₄ signifient le radical -OR₇, R₇ représentant les alkyle en C₁-C₄, hydroxyalkyle en C₂-C₄ ou -CH₂-CH(OH)CH₂-OH.

7. Matériau d'enregistrement selon la revendication 1, où R₁ et R₂ représentent CH₃, R₃ représente -COO⊖M⊕ et R₄ représente le méthoxy.

8. Matériau d'enregistrement selon la revendication 1, où R₁ et R₂ indépendamment l'un de l'autre représentent les alkyle en C₁-C₄ ou alkyle en C₁-C₄ substitué par -COO⊖M⊕, ou R₁ et R₂ ensemble représentent les alkylène en C₁-C₄, R₃ et R₄, indépendamment l'un de l'autre, signifient les H, -COO⊖M⊕, alcoxy en C₁-C₄, (alkyle en C₁-C₄)-COO⊖M⊕, alkyle en C₁-C₄ ou SO₃⊖M⊕ et R3' et R4', indépendamment l'un de l'autre, représentent les H ou alcoxy en C₁-C₄.

9. Matériau d'enregistrement selon la revendication 1, qui contient de plus un absorbeur d'UV, plus particulièrement de la série de la 2-hydroxyphénylbenzotriazole.

10. Matériau d'enregistrement selon la revendication 1, qui contient de plus un polymère cationique ou un agent mouillant cationique.

11. Matériau d'enregistrement selon la revendication 1, qui contient une couche comportant du Si0₂ et de l'alcool polyvinylique.

12. Matériau d'enregistrement selon la revendication 1, qui contient des fibres de cellulose ou fibres textiles.

13. Utilisation de composés de formule 1 selon la revendication 1, en tant que stabilisants pour matériaux d'enregistrement pour l'impression à jet d'encre.
